# EUROPEAN PATENT SPECIFICATION

(11) **EP 1 807 466 B1**
(45) Date of publication and mention of the grant of the patent: **10.03.2010**
(21) Application number: 05817318.8
(22) Date of filing: 24.10.2005
(51) Int. Cl.: C08G 65/26

(54) **METHOD FOR ALKOXYLATING ACTIVE HYDROGEN CONTAINING COMPOUNDS AND THE ALKOXYLATED COMPOUNDS MADE THEREFROM**
VERFAHREN ZUR ALKOXYLIERUNG VON AKTIVEN WASSERSTOFF ENTHALTENDEN VERBINDUNGEN UND DARAUS HERGESTELLTE ALKOXYLIERTE VERBINDUNGEN
PROCEDE POUR ALCOXYLER DES COMPOSES CONTENANT DE L'HYDROGENE ACTIF ET COMPOSES ALCOXYLES OBTENUS

(30) Priority: 26.10.2004 US 622298 P
(43) Date of publication of application: 18.07.2007
(73) Proprietor: DOW GLOBAL TECHNOLOGIES INC., Midland MI 48674 (US)
(72) Inventor: WEHMEYER, Richard, M., Lake Jackson, TX 77566 (US); WESTON, John, W., Sugarland, TX 77478 (US); WALTERS, Marlin, E., West Columbia, TX 77486 (US)
(74) Representative: Raynor, John
(86) International application number: PCT/US2005/038220
(87) International publication number: WO 2006/047436

(56) References cited:
- EP-A- 1 258 291
- WO-A-2004/096883
- US-A- 4 543 369

## Description

This application claims benefit of United States Provisional Patent Application No. 60/622,298, filed October 26, 2004.

This invention relates to processes for preparing poly(oxyalkylene) polymers and to methods for preparing same.

Polyethers made from alkylene oxides are well known and useful in a number of applications such as detergent and cleaner compositions, oil well drilling fluids, inks, metal working fluids, lubricants in paper coating compositions, ceramics manufacturing, chemical intermediates for nonionic surfactants which in turn are used in cosmetics, textiles and chemical processing, polyurethanes which are used as flexible foams and elastomers, chemical intermediates for esters which are used in textile spin finishes, cosmetic agents, and as foam control agents for a wide variety of processes. These polymers may have no more than one oxyalkylene group in succession, or be a higher molecular weight polymer containing one or more long chains of consecutive oxyalkylene groups.

Polyethers of this type are commonly made through an anionic polymerization process, whereby the alkylene oxide is combined with an initiator compound and a strongly basic catalyst such as potassium hydroxide or certain organic amines. The initiator compound contains one or more oxyalkylatable groups such as hydroxyl, thiol, carboxylic acid and the like. The initiator compound determines the functionality (i.e., number of hydroxyl groups/molecule of product) and in some cases may introduce some desired functional group into the product.

There are some disadvantages of polymerizing alkylene oxides using these strongly basic catalysts. One problem is that the strongly basic catalysts do not produce a low polydispersity product when a tertiary alcohol initiator compound is used. In addition, the basic catalyst usually must be removed from the product before it is used, which increases manufacturing costs.

In addition, some kinds of initiator compounds cannot be alkoxylated using strongly basic catalysts, because they contain base-sensitive functional groups. For example, initiators containing certain types of alkenyl or alkynyl groups undergo a side reaction in which the alkenyl or alkynyl group will "migrate" along the molecular chain, so that the unsaturation in the polyether is at a different place than it was on the initiator. This is of particular concern when terminal unsaturation is desired. Often, unsaturation that is in a terminal position on the initiator migrates to a non-terminal position during the alkoxylation reaction.

Unsaturated compounds in which a triple bond is adjacent to a hydroxyl-substituted carbon atom are prone to decomposing during the alkoxylation reaction. Many compounds of this type are reaction products of acetylene with a ketone such as acetone or an aldehyde such as acetaldehyde. Alkali metal or alkaline earth bases can cause these initiators to decompose to regenerate acetylene. Acetylene is an explosion hazard.

In order to try to avoid these problems, Lewis acids such as boron trifluoride-diethyl etherate and organic amines such as triethylamine have been tried. However, some of these catalysts tend to promote the formation of large amounts of by-products, especially when it is attempted to add three or more moles of alkylene oxide per equivalent of initiator compound. The Lewis acid catalysts tend to catalyze "back-biting" reactions where the growing polymer chain reacts with itself. The reactions form cyclic ethers such as dioxane, dimethyldioxane and various crown ethers. These cannot be removed easily from the desired product, and so the product cannot be used in many applications.

To solve some of the problems described, a metal cyanide catalyst complex has been employed, but the use of such metal cyanide catalysts has been limited due to their sensitivity to catalysts needed to form the initiator compounds containing active hydrogen initiating groups (e.g., hydroxyl, anhydride, primary and secondary amino groups). Consequently, the use of metal cyanide catalysts have required initiators free from catalysts (e.g., bases and acids) used to form the initiators, which has required extensive purification of such initiators.

Thus, it would be desirable to provide a method whereby polyethers made using certain initiator compounds could be produced in good yield with low levels of by-products without having to purify the initiator compounds.

In one aspect, this invention is a process for preparing a polyether comprising;
(i) forming a functionalized initiator by reacting a vegetable oil, animal fat, fatty acid or fatty acid alkyl ester in the presence of a functionalizing catalyst to introduce hydroxymethyl groups these to form the functionalized initiator compound,
(ii) forming a mixture, of the functionalized initiator containing at least a portion of the functionalizing catalyst from step (i), an alkylene oxide and a metal cyanide catalyst complex, and,
(iii) subjecting the mixture to conditions sufficient to activate the catalyst complex and to alkoxylate the functionalized initiator compound to form the polyether. The functionalizing catalyst is a catalyst that is used to incorporate into the initiator compound groups that are reactive with the alkylene oxide such that the polyether can be formed using a metal cyanide complex.

In a second aspect, this invention is a polyether of the first aspect i.e., poly(alkylene oxide), polymer containing the functionalizing catalyst and the metal cyanide catalyst.

This invention permits the ready formation of polymers of initiators that have been functionalized (chemical groups that react with the alkylene oxide, for example, hydroxyls, carboxylic acids, and amines) without having to scrupulously remove the catalyst or catalysts used to form such initiators to avoid poisoning of the metal cyanide catalyst.

In this invention, functionalized initiators that have been formed using a catalyst are alkoxylated by reaction with one or more alkylene oxides in the presence of a catalytically effective amount of a metal cyanide catalyst. The alkoxylation is conducted by combining the functionalized initiator, metal cyanide catalyst and alkylene oxide. The catalyst is then allowed to become activated in the presence of the alkylene oxide. Once the catalyst has become activated, the mixture is subjected to conditions sufficient to polymerize the alkylene oxide. In this manner, the functionalized initiator becomes alkoxylated until poly(oxyalkylene) chains of a desired length are introduced. As discussed below, once polymerization has begun, other types of monomers that are copolymerizable with alkylene oxides can be polymerized as well.

The functionalized initiator is derived from an organic compound (precursor initiator compound) that has been reacted using a catalyst to incorporate hydroxymethyl groups that may be alkoxylated using a metal cyanide catalyst. The precursor initiator compound is a vegetable oil, animal fat, modified vegetable oil, modified fat or combination thereof. Modified herein means altering the vegetable oil or fat in some way but not functionalizing the oil or fat. It is understood herein that fatty acids from the fat or oil (i.e., simple saponification) are not functionalized initiators.

The precursor initiator compound may be any animal fat or vegetable oil that is comprised of triglycerides that upon saponification with a base such as aqueous sodium hydroxide yields a fatty acid and glycerol, where at least a portion of the fatty acids are unsaturated fatty acids (i.e., contain at least one carbon-carbon double bond). Preferred vegetable oils are those that yield at least about 70 percent unsaturated fatty acids by weight. More preferably, the vegetable oil yields at least about 85 percent, more preferably at least 87 percent, and most preferably at least about 90 percent by weight unsaturated fatty acids. It is understood that specific fatty acids derived from a vegetable oil, animal fat or any other source may be used. That is to say, for example, palmitoleic, oleic, linoleic, linolenic and arachidonic fatty acids or their alkyl esters may be used to form the precursor initiator compound that is used to form the functionalized initiator. It is preferred, however, to use a vegetable oil as previously described. Preferred vegetable oils include, for example, soy, safflower, cotton, linseed, peanut, olive, sunflower, canola, rapeseed, corn, palm oil or combination thereof. More preferably, the vegetable oil is a soy, sunflower, canola, corn, rapeseed oil, or combination thereof. Most preferably, the vegetable oil is soy, sunflower, canola oil or combination thereof. It is understood that the vegetable oil may be obtained from a genetically modified organism, such as genetically modified soybean, sunflower or canola.

The functionalized initiator may then be formed by taking the fatty acid alkyl esters of the fatty acid, the fatty acid of a vegetable oil or fat, or the vegetable oil or fat itself and by any suitable hydroxymethylation process such as those known in the art to form, for example, a "hydroxymethylated" animal fat or vegetable oil, or their corresponding fatty acid or alkyl ester functionalized initiator. The hydroxymethyl group may be introduced by a hydroformylation process using a cobalt, nickel or rhodium catalyst, followed by the hydrogenation of the formyl group to obtain the hydroxymethyl group by catalytic or by chemical reduction. Procedures to form such compounds are described in U.S. Pat. Nos. 4,216,343; 4,216,344; 4,304,945 and 4,229,562 and in particular 4,083,816. Other known processes to form hydroxymethylesters from fatty acids may also be used such as described by U.S. Pat. Nos. 2,332,849 and 3,787,459. These hydroxymethylester initiator compounds may then be further transesterified as described by US. Patent Nos. 4,423,162; 4,496,487 and 4,543,369 and copending International application WO 2004/012427 designating the U.S using a catalyst such as a tin or titanium catalyst, enzyme catalyst or combination thereof, each of the above patents or applications for patent being incorporated herein by reference. Exemplary tin and titanium catalysts for the transesterification include tin (II) octanoate, tin (II) 2-ethylheptanoate, dibutyl tin (IV) dilaurate, and other tin catalysts that are similarly functionalized, titanium tetraisopropoxide, titanium tetraisobutoxide, or any appropriately functionalized titanium (IV) alkoxide or combination thereof. An exemplary enzyme catalyst is lipase.

Preferably, the functionalized initiator from the just described process is a modified vegetable oil that is a polyol comprised of 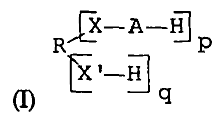 and

(II) R-[X-A-H] ₜ

where R is a residue of a polyol, polyamine or aminoalcohol initiator; X and X' may the same or different and is O, N or NH; p is an integer from 1 to 5; q is an integer from 1 to 5 wherein p + q is from 3 to 8, t is an integer from 3 to 8 and A may be the same or different and is selected from the group consisting of A1, A2 and A3 where
A1 is 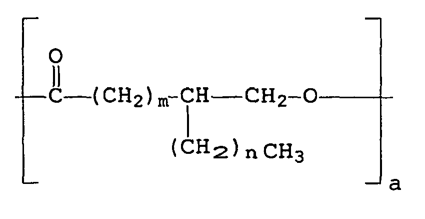 A2 is 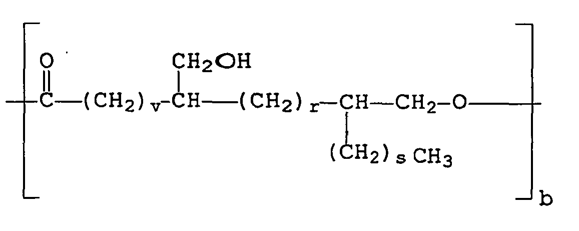 A3 is 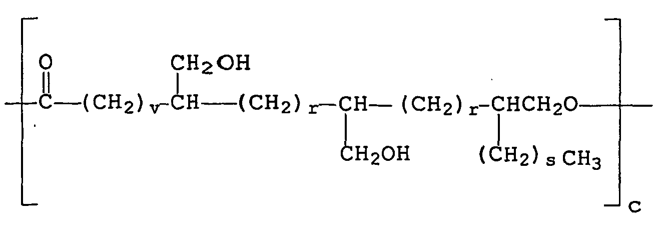 where m, n, v, r, s, a, b and c are integers and m is greater than 3, n greater than or equal to zero and m+n is from 11 to 19, v is greater than 3, r is greater than or equal to zero, s is greater than or equal to zero and v+r+s is from 10 to 18, a is from 0 to 35, b is from 0 to 35 and c is from 0 to 35, so long as that all a's, b's and c's in any molecule of the vegetable oil based polyol are not all zero and (a+b+c)/(p+q+t) is greater than 0 to about 100. These preferred polyols generally are formed using a titanium, tin or enzyme catalyst described above.

The residue of the polyol, polyamine or aminoalcohol initiator may be any of those described in WO 04/096882.

Even though the particular catalysts described above used to functionalize the initiator need not be removed, because they have surprisingly been found not to impede the alkoxylation using a metal cyanide catalyst, they may at least be partially removed for other reasons such as side reactions that may be catalyzed by such catalysts during alkoxylation. Preferably, at most about 75%, more preferably at most about 50%, even more preferably at most about 25%, and most preferably at most about 10% of the functionalizing catalyst is removed prior to alkoxylating. Generally, the amount of functionalizing catalyst remaining in the resultant polyether is at least about 5 parts per million by weight- Preferably, the amount of the functionalizing catalyst remaining in the resultant polyether is at least about 10 parts per million by weight (ppm), more preferably at least about 25 ppm, even more preferably at least about 50 ppm, and most preferably at least about 100 ppm.

After the functionalized initiator has been formed, the alkoxylation is performed by first mixing the functionalized initiator, DMC catalyst and an alkylene oxide and allowing the mixture to sit for a period of time at room or an elevated temperature. When these materials are mixed, a so-called induction period occurs, during which the oxyalkylene reaction occurs very slowly. The induction period may range from a few minutes to several hours, depending on the particular DMC catalyst that is used and the temperature. During this induction period, the DMC catalyst becomes activated, and rapid polymerization of the alkylene oxide then commences.

The starting mixture of DMC catalyst, functionalized initiator and alkylene oxide is conveniently made by combining the DMC catalyst and functionalized initiator in a pressure reactor (or by forming the catalyst in the initiator), and then pressurizing the reactor with an initial quantity of alkylene oxide. The induction period follows, as indicated by a nearly constant or slowly decreasing pressure in the reactor. The onset of rapid polymerization that follows the induction period is evidenced by a drop in pressure as the alkylene oxide is consumed.

The starting mixture of DMC catalyst, functionalized initiator and alkylene oxide may be brought to any convenient temperature to activate the catalyst, such as from about 20°C, preferably from about 50°C, more preferably from about 70°C, even more preferably from about 80°C to about 150°C, most preferably to about 100°C. These temperatures are also suitable for conducting the polymerization once the DMC catalyst is activated.

Depending on the desired degree of alkoxylation, all the necessary alkylene oxide may be added to the reactor at the outset. It is usually preferred to add more alkylene oxide to the reactor once the DMC catalyst has become activated, especially when making higher molecular weight polyethers. A convenient way of adding the alkylene oxide is to pressurize the reactor with alkylene oxide and allow alkylene oxide to feed to the reactor on demand, maintaining a more or less constant pressure inside the reactor. Alternatively, any additional alkylene oxide may be fed in one or more discrete increments.

The total amount of alkylene oxide that is fed will depend on the desired equivalent weight of the product. As few as one mole of alkylene oxide per equivalent of initiator compound can be added. This invention is particularly suited for polymerizing at least about 1 mole of alkylene oxide per equivalent of initiator compound. Sufficient alkylene oxide can be added to make any desirable molecular weight polyether, such as one having a weight average molecular weight of 200,000 daltons or more. However, in most cases the intended end-use of the product will dictate its molecular or equivalent weight. Thus, for example, for making polyols for polyurethane applications, polyether equivalent weights of from about 75-500 are of particular interest for rigid polyurethane foams, equivalent weights of from about 300-1300 are of particular interest for making molded foams and high resiliency slabstock foams, and equivalent weights of from about 800-3000 are of particular interest for making conventional slabstock foam and reaction injection molded elastomers. For surfactant applications, molecular weights of from about 350 to about 6000 are of particular interest. In most applications, it is desirable that the product be a liquid. Poly(oxyethylene) homopolymers tend to form solids when their weight average molecular weights exceed about 700 daltons. All weights reported above are number average molecular weights.

Similarly, the selection of alkylene oxide will depend to a large extent on the intended end-use of the product. Among the alkylene oxides that can be polymerized with the catalyst complex of the invention are ethylene oxide, propylene oxide, 1,2-butylene oxide, styrene oxide, and mixtures thereof. Mixtures of these can be used, and two or more of them can be polymerized sequentially to make block copolymers. For polyurethanes applications, preferred alkylene oxides are propylene oxide alone, mixtures of at least 50 weight % propylene oxide and up to about 50 weight % ethylene oxide (to form a random copolymer), and propylene oxide followed by ethylene oxide, so as to form terminal poly(oxyethylene) chains constituting up to about 30% of the total weight of the product. For other applications, ethylene oxide alone, 1,2-butylene oxide, ethylene oxide/1,2-butylene oxide mixtures, ethylene oxide followed by propylene oxide or butylene oxide, butylene oxide followed by ethylene and/or propylene oxide, propylene oxide alone, mixtures of propylene oxide and ethylene and/or butylene oxide, and propylene oxide followed by ethylene and/or butylene oxide are preferred alkylene oxides.

In addition, monomers that will copolymerize with the alkylene oxide in the presence of the DMC catalyst complex can be used to prepare modified polyether polyols, after the DMC catalyst has become activated. Such comonomers include oxetanes as described in U. S. Patent Nos. 3,278,457 and 3,404,109 and anhydrides as described in U. S. Patent Nos. 5,145,883 and 3,538,043, which yield polyethers and polyester or polyetherester polyols, respectively. Lactones as described in U. S. Patent No. 5,525,702 and carbon dioxide are examples of other suitable monomers that can be polymerized in accordance with the invention.

The polymerization reaction may be performed continuously or batchwise. In such continuous processes, the initiator/catalyst mixture is continuously fed into a continuous reactor such as a continuously stirred tank reactor (CSTR) or a tubular reactor. A feed of alkylene oxide is introduced into the reactor and the product continuously removed.

The concentration of the DMC catalyst is selected to polymerize the alkylene oxide at a desired rate or within a desired period of time. Generally, a suitable amount of DMC catalyst is from about 5 to about 10,000 parts by weight metal cyanide catalyst complex per million parts of the product. For determining the amount of catalyst complex to use, the weight of the product is generally considered to equal the combined weight of alkylene oxide and initiator, plus any comonomers that may be used. More preferred catalyst complex levels are from about 10, especially from about 25, to about 5000, more preferably about 3000 ppm, on the same basis.

The metal cyanide catalyst can be represented by the general formula:

Mb[M¹(CN)r(X)t]c[M²(X)6]d · zL · nM³xAy,

wherein M is a metal ion that forms an insoluble precipitate with the M¹(CN)r(X)t group and which has at least one water soluble salt;
M¹ and M² are transition metal ions that may be the same or different;
each X independently represents a group other than cyanide that coordinates with an M¹ or M² ion;
L represents an organic complexing agent;
M³xAy represents a water-soluble salt of metal ion M³ and anion A, wherein M³ is the same as or different than M;
b and c are positive numbers that, together with d, reflect an electrostatically neutral complex;
d is zero or a positive number;
x and y are numbers that reflect an electrostatically neutral salt;
r is from 4 to 6; t is from 0 to 2;
z is zero or a positive number and n is a positive number indicating the relative quantities of the complexing agent and MxAy, respectively. z and n may be fractions.

The X groups in any M²(X)₆ do not have to be all the same. The molar ratio of c:d is advantageously from about 100:0 to about 20:80, more preferably from about 100:0 to about 50:50, and even more preferably from about 100:0 to about 80:20.

Similarly, the catalyst may contain two or more types of M¹(CN)r(X)t groups and two or more types of M²(X)₆ groups.

M and M³ are preferably metal ions selected from the group consisting of Zn⁺², Fe⁺², Co⁺², Ni⁺², Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺2, Cu⁺², La⁺³ and Cr⁺³. M and M³ are more preferably Zn⁺², Fe⁺², Co⁺², Ni⁺², La⁺³ and Cr⁺³. M is most preferably Zn⁺².

Suitable anions A include halides such as chloride and bromide, nitrate, sulfate, carbonate, cyanide, oxalate, thiocyanate, isocyanate, perchlorate, isothiocyanate, and a C₁₋₄ carboxylate. Chloride ion is especially preferred.

M¹ and M² are preferably Fe⁺³, Fe⁺², Co⁺³, Co⁺², Cry⁺², Cr⁺³, Mn⁺², Mn⁺³, Ir⁺³, Ni⁺², Rh⁺³, Ru⁺², V⁺⁴ and V⁺⁵. Among the foregoing, those in the plus-three oxidation state are more preferred. Co⁺³ and Fe⁺³ are even more preferred and Co⁺³ is most preferred.

Preferred groups X include anions such as halide (especially chloride), hydroxide, sulfate, C₁₋₄ carbonate, oxalate, thiocyanate, isocyanate, isothiocyanate, C₁₋₄ carboxylate and nitrite (NO₂-), and uncharged species such as CO, H₂O and NO. Particularly preferred groups X are NO, NO₂-and CO.

The catalyst is usually complexed with an organic complexing agent. A great number of complexing agents are potentially useful, although catalyst activity may vary according to the selection of a particular complexing agent. Examples of such complexing agents include alcohols, aldehydes, ketones, ethers, amides, nitriles, sulfides, and the like.

Suitable alcohols include monoalcohols and polyalcohols. Suitable monoalcohols include methanol, ethanol, n-propanol, isopropanol, n-butanol, isobutanol, t-butanol, octanol, octadecanol, 3-butyn-1-ol, 3-butene-1-ol, propargyl alcohol, 2-methyl-2-propanol, 2-methyl-3-butyn-2-ol, 2-methyl-3-butene-2-ol, 3-butyn-1-ol, 3-butene-1-ol, 1-t-butoxy-2-propanol and the like. Suitable monoalcohols also include halogenated alcohols such as 2-chloroethanol, 2-bromoethanol, 2-chloro-1-propanol, 3-chloro-1-propanol, 3-promo-1-propanol, 1,3-dichloro-2-propanol, 1-chloro-2-methyl-2-propanol as well as nitroalcohols, keto-alcohols, ester-alcohols, cyanoalcohols, and other inertly substituted alcohols.

Suitable polyalcohols include ethylene glycol, propylene glycol, glycerine, 1,1,1-trimethylol propane, 1,1,1-trimethylol ethane, 1,2,3-trihydroxybutane, pentaerythritol, xylitol, arabitol, mannitol, 2,5-dimethyl-3-hexyn-2,5-diol, 2,4,7,9-tetramethyl-5-decyne-4,7-diol, sucrose, sorbitol, alkyl glucosides such as methyl glucoside and ethyl glucoside, and the like. Low molecular weight polyether polyols, particular those having an equivalent weight of about 350 or less, more preferably about 125-250, are also useful complexing agents.

Suitable aldehydes include formaldehyde, acetaldehyde, butyraldehyde, valeric aldehyde, glyoxal, benzaldehyde, toluic aldehyde and the like. Suitable ketones include acetone, methyl ethyl ketone, 3-pentanone, 2-hexanone and the like.

Suitable ethers include cyclic ethers such as dioxane, trioxymethylene and paraformaldehyde as well as acyclic ethers such as diethyl ether, 1-ethoxy pentane, bis(betachloro ethyl) ether, methyl propyl ether, diethoxy methane, dialkyl ethers of alkylene or polyalkylene glycols (such as ethylene glycol dimethyl ether, diethylene glycol dimethyl ether, triethylene glycol dimethyl ether and octaethylene glycol dimethyl ether), and the like.

Amides such as formamide, acetamide, propionamide, butyramide and valeramide are useful complexing agents. Esters such as amyl formate, ethyl formate, hexyl formate, propyl formate, ethyl acetate, methyl acetate, triethylene glycol diacetate and the like can be used as well. Suitable nitriles include acetonitrile, proprionitrile and the like. Suitable sulfides include dimethyl sulfide, diethyl sulfide, dibutyl sulfide, diamyl sulfide and the like.

Preferred complexing agents are t-butanol, 1-t-butoxy-2-propanol, polyether polyols having an equivalent weight of about 75-350 and dialkyl ethers of alkylene and polyalkylene glycols. Especially preferred complexing agents are t-butanol, 1-t-butoxy-2-propanol, polyether polyols having an equivalent weight of 125-250 and a dimethyl ether of mono-, di- or triethylene glycol. t-Butanol and glyme (1,2-dimethoxy ethane) are especially preferred.

A silane-functional complexing agent, as described in U.S. Patent No. 6,348,565, may be used instead of or in additino to the aforementioned complexing agents. As described therein, the silane-functional complexing agent may be polymerized to form a film or polymer, optionally on a support, or may function as a coupling agent to attach the catalyst complex to a support material.

In addition, the catalyst complex often contains a quantity of water that is bound into the crystalline lattice of the complex. Although the amount of bound water is difficult to determine, it is believed that this amount is typically from about 0.25 to about 3 moles of water per mole of M¹ and M² ions.

Exemplary catalysts include:
Zinc hexacyanocobaltate · zL · aH₂O · nZnCl₂;
Zn[Co(CN)₅NO] · zL · aH₂O · nZnCl₂;
Znₛ[Co(CN)₆]o[Fe(CN)₅NO]ₚ · zL · aH₂O · nZnCl₂ (o, p = positive numbers, s=1.5o + p);
Znₛ[Co(CN)₆]o[Co(NO₂)₆]ₚ[Fe(CN)₅NO]_{q} · zL · aH₂O · nZnCl₂ (o, p, q = positive numbers, s=1.5(o+p)+q);
Zinc hexacyanocobaltate · zL · aH₂O · nLaCl₃;
Zn[Co(CN)₅NO] · zL · aH₂O · nLaCl3;
Zn[Co(CN)₆]o[Fe(CN)₅NO]ₚ · zL · aH₂O · nLaCl₃ (o, p = positive numbers, s=1.5o + p);
Znₛ[Co(CN)₆]o[Co(NO₂)₆]ₚ[Fe(CN)₅NO]_{q} · zL · aH₂O · nLaCl₃ (o, p, q = positive numbers, s=1.5(o+p)+q);
Zinc hexacyanocobaltate · zL · aH₂O nCrCl₃;
Zn[Co(CN)₅NO] · zL · aH₂O · nCrCl₃;
Znₛ[Co(CN)₆]o[Fe(CN)₅NO]ₚ · zL · aH₂O · nCrCl₃ (o, p = positive numbers, s=1.5o + p);
Znₛ[Co(CN)₆]o[Co(NO₂)₆]ₚ[Fe(CN)₅NO]_{q} · zL · aH₂O · nCrCl₃(o,p,q= positive numbers,
s=1.5(o+p)+q);
Magnesium hexacyanocobaltate · zL · aH₂O · nZnCl₂;
Mg[Co(CN)₅NO] · zL · aH₂O · nZnCl₂;
Mgₛ[Co(CN)₆]o[Fe(CN)₅NO]ₚ · zL · aH₂O · nZnCl₂ (o, p = positive numbers,s=1.5o + p);
Mgₛ[Co(CN)₆]ₒ[Co(NO₂)₆]ₚ[Fe(CN)₅NO]_{q} · zL · aH₂O · nZnCl₂ (o, p, q = positive numbers, s=1.5(o+p)+q);
Magnesium hexacyanocobaltate · zL · aH₂O · nLaCl₃;
Mg[Co(CN)₅NO] · zL · aH₂O · nLaCl₃;
Mgₛ[Co(CN)₆]ₒ[Fe(CN)₅NO]ₚ · zL · aH₂O · nLaCl₃ (o, p = positive numbers, s=1.5o + p);
Mgₛ[Co(CN)₆]ₒ[Co(NO₂)₆]ₚ[Fe(CN)₅NO]_{q} · zL · aH₂O · nLaCl₃ (o, p, q = positive numbers, s=1.5(o+p)+q);
Magnesium hexacyanocobaltate · zL · aH₂O · nCrCl₃;
Mg[Co(CN)₅NO] · zL · aH₂O · nCrCl₃;
Mgₛ[Co(CN)₆]o[Fe(CN)₅NO]ₚ · zL · aH₂O · nCrCl₃ (o, p = positive numbers, s=1.5o + p);
Mgₛ[Co(CN)₆]ₒ[Co(NO₂)₆]ₚ[Fe(CN)₅NO]_{q} · zL · aH₂O · nCrCl₃ (o, p, q = positive numbers, s=1.5(o+p)+q);
as well as the various complexes such as are described at column 3 of U. S. Patent No. 3,404,109. Preferred metal cyanide catalysts include those described in WO 03/080239 and WO 03/080240.

The DMC catalyst complex may be supported. One method of making a supported DMC catalyst is by precipitating the catalyst in the presence of a polycarboxyl or polycarboxylate compound, as described in WO 01/04180. Supported DMC catalysts as described in WO 99/44379 are also useful. In addition, supported DMC catalysts can be prepared as described in the U.S. Pat. No. 6,348,565.

The DMC catalyst complex is conveniently made using standard precipitation methods as are described, for example, in U. S. Patent Nos. 3,278,457, 3,278,458, 3,278,459, 3,404,109, 3,427,256, 3,427,334, 3,427,335, 5,470,813, 5,482,908, 5,536,883, 5,589,431, 5,627,120, 5,627,122, 5,639,705, 5,714,428, 5,731,407, 5,780,584, 5,783,513, all incorporated herein by reference. In addition, the DMC catalyst may be formed directly as a dispersion in an initiator compound, as described in U.S. Pat. No. 6,429,166, or through an incipient wetness technique as described in U.S. Pat. No. 6,423,662.

The product polyether contains one or more chains of oxyalkylene groups that are bonded to the functionalized initiator through a heteroatom. The heteroatom is preferably oxygen and the linkage is most preferably an ether linkage.

The product polyether is typically prepared in good yield with only small amounts of undesired by-products. In some instances, the product may contain a high molecular weight fraction that has a weight average molecular weight of 1.5X or more of that of the desired product. Typically, when this fraction is present, it constitutes about 20% or less, more typically less than about 10% of the total weight of the product.

The product polyether is generally characterized by having a good polydispersity, typically less than about 2.0, more typically less than about 1.6 and preferably less than about 1.2, as crude products before purification to remove high molecular weight species. The following examples are provided to illustrate the invention, but are not intended to limit its scope. All parts and percentages are by weight unless otherwise indicated.

For all of the Examples, the DMC catalyst is a catalyst prepared in the same way as described by Example 15 of published WO patent application WO 03/080239.

### Example 1. DMC Catalyzed Propoxylation of Methyl Hydroxymethylstearate (HMS) Starting Reagents:

Methyl Hydroxymethylstearate (0.1223 g) (from methyl oleate) containing rhodium catalyst (the functionalizing catalyst) is produced according to the procedure described in WO 04/096744.

### Propylene Oxide (0.5895 g)

3 wt% DMC slurry catalyst composition in 20=1 wt/wt Voranol* 2070 (a 700 molecular weight glycerine propoxylate) polyol/trimethylolpropane (0.0122 g, to provide, 505 ppm of DMC catalyst in the product based upon total mass of reactants charged). Voranol** is a Trademark of the Dow Chemical Company.

All reagents are charged into the sealed reactor vial in a nitrogen atmosphere drybox and the polymerization is performed at 90°C for 21 h. After devolatilization for 30 min at 90°C under a nitrogen sweep to remove any unreacted propylene oxide (PO), the final fluid product mass is 0.7228 g. This corresponds to about 100% yield in the propoxylation reaction.

### Example 2: DMC Propoxylation of a Polyhydroxy Polyester Functionalized Initiator Compound

A polyhydroxy polyester functionalized initiator compound is formed as follows. Methyl hydroxymethyl stearate (HMS), made in a like manner as described in the previous example, (76.66 g) and 400 molecular weight ethoxylated glycerine (23.34 g) are added to a tared 250-mL, three-necked round bottom flask fitted with a magnetic stirbar, heating mantle, thermocouple attached to an electronic temperature controller, Dean-Stark trap fitted with a chilled condenser and attached house-vacuum inlet, and nitrogen sweep via a needle insert though a rubber septum. The reactor and contents are alternately evacuated then refilled with nitrogen several times to remove air. The mixture of HMS and ethoxylated glycerine is slowly he ated to 140°C over 45 min under vacuum (100-125 torr) with a slight nitrogen sweep to remove water and other volatiles. The clear, essentially colorless mixture is maintained at 140°C for an additional 25 min with vacuum and nitrogen applied.

Tin(II) 2-ethylhexanoate (0.0171 g) is then added at 140°C under nitrogen padding with no vacuum applied. The temperature is increased to 150°C and additional tin(II) 2-ethylhexanoate is added in three separate portions over 35 min. A total of 0.1146 g of tin(II) 2-ethylhexanoate is added during the time the reaction mixture is in the 140-150°C operating temperature range. Only very slight bubbling and volatiles evolution are observed at these catalyst charges and reaction conditions.

The reaction mixture is heated incrementally to 160°C, then to 170°C over 30 min. During this heating period, bubbling and overhead distillate collection rate increases. The mixture is then heated to 180°C, at which the bubbling and overhead distillate collection rate increases to approximately 1 mL per 10 min. After 30 min, a slow nitrogen gas sweep is introduced via the needle inserted in the septum with the gas exiting thorough the open condenser. The mixture is maintained at 180°C for a total of 70 min, providing approximately 6 mL of collected distillate over this time period. The bubbling and distillate collection rate diminishes toward the end of the reaction period at 180°C.

The pale yellow, clear reaction mixture is then heated to 190°C while still maintaining a slight nitrogen sweep over the head space. The bubbling and distillate collection rates increase slightly during the initial heating stage at 190°C. The mixture is maintained at 190°C for approximately 1 h. A total of approximately 8-8.5 mL of distillate is collected over the various heating stages from 160-190°C using a nitrogen sweep.

The mixture is heated to 200°C, at which a slight initial increase in bubbling is observed in the liquid. Vacuum (100-125 torr) and a slight nitrogen sweep is then applied to the 200°C reaction mixture to further remove methanol from the reaction mixture and drive the transesterification to form the functionalized initiator compound. The mixture is maintained at 200°C under vacuum with a nitrogen sweep for a total of 3 h. The reactor and functionalized initiator compound are cooled to ambient temperature. The functionalized initiator compound is a viscous, pale yellow fluid having a product mass (92.33 g) as determined by mass difference.

This functionalized initiator compound is propoxylated as follows. Starting Reagents:
Functionalized initiator compound (0.1203 g)
Propylene Oxide (0.5935 g)
3 wt% DMC slurry catalyst composition in 20:1 wt/wt Voranol* 2070 polyol/trimethylolpropane (0.0120 g, to provide 496 ppm of DMC catalyst in the product based upon total mass of reactants charged).

All reagents are charged into the reactor vial in a nitrogen atmosphere drybox and the polymerization is performed at 90°C for 21 h. After devolatilization for 30 min at 90°C under a nitrogen sweep to remove any unreacted PO, the final fluid product mass is 0.7255 g. This corresponds to about 100% yield in the propoxylation reaction.

### Comparative Example 3. Propoxylation of Ring Opened Epoxidized Soybean Oil

FLEXOL^{™} EPO plasticizer, an epoxidized soy bean oil, available from The Dow Chemical Company, Midland MI, (250.0 g, 7.0 wt% epoxide O, approximately 1.09 mol epoxide) and methanol (250 g, 7.80 mol) are added to a 1-liter, three-necked round bottom flask equipped with a mechanical stirrer, condenser topped with nitrogen/vacuum inlet, heating mantle, and a thermocouple probe connected to an electronic temperature controller. While stirring at 300 rpm, the two-phase mixture is evacuated and back-filled with nitrogen several times to remove air. The mixture is then heated to 65°C while stirring at 300 rpm. At approximately 50°C, the mixture becomes a clear, pale yellow, homogeneous solution.

DOWEX* MSC-1 (*Trademark of the Dow Chemical Company, Midland, Michigan) ion exchange resin beads (50 g) are thoroughly rinsed with warm methanol, then water, then extensively with warm methanol to remove color bodies and water. The beads are then briefly air-dried under vacuum, providing 38.1 g of rinsed and dried DOWEX* MSC-1 ion exchange resin beads. The dried beads are then added to the 65°C reaction mixture under a pad of nitrogen and the stirring rate is increased to 500 rpm. The 65°C reaction mixture is allowed to stir at 500 rpm for 18 h.

Upon cooling to room temperature (24°C), the reaction mixture consists of a clear, homogeneous, pale yellow solution plus resin beads. The mixture is vacuum filtered to remove the DOWEX* MSC-1 ion exchange resin beads and the beads are rinsed several times with methanol. The air-dried beads are briefly air-dried, providing a recovered mass of 46.2 g. The combined filtrates are vacuum distilled with a slight nitrogen sweep on a rotary evaporator at 60°C bath temperature while gradually decreasing the pressure to 10-15 torr. After 1 h at 60°C / 10-15 torr, the bath temperature is increased to 70°C and the mixture is further distilled for 2 h at 70°C / 10-15 torr with a slight vacuum sweep. The final functionalized initiator compound (262.7 g) is a clear, light golden-yellow oil with 5.158% hydroxyl by titration and an acid number of 0.006 meq/g.

The functionalized initiator compound (light golden yellow oil) is propoxylated as follows.
Starting Reagents;
Functionalized initiator compound (0.1246 g)
Propylene Oxide (0.5895 g)
3 wt% DMC slurry catalyst composition in 20:1 wt/wt Voranol* 2070 polyol/trimethylolpropane (0.0120 g to provide 496 ppm of DMC catalyst in the product based upon total mass of reactants charged).

All reagents are charged into the reactor vial in a nitrogen atmosphere drybox and the polymerization is performed at 90°C for 21 h. After devolatilization for 30 min at 90°C under a nitrogen sweep to remove any unreacted PO, the final fluid product mass is 0.7262 g. This corresponds to about 100% yield in the propoxylation reaction.

### Comparative Example 4: Propoxylation of Ring Opened Epoxidized Soybean Oil

Soybean oil (200 g) is added to a 500-mL, three-necked round bottom flask equipped with a mechanical stirrer, chilled condenser, heating mantle, and a thermocouple probe connected to an electronic temperature controller. The mixture is heated to 50°C and stirred at 700 rpm.

Aqueous 50% hydrogen peroxide (74.8 g total) and 90% formic acid (16.9 g total) are each added sequentially in four portions to the reaction mixture at 50 °C and 700 rpm stirring over a 2 h 15 min addition period with 30-70 min between additions. In each addition, one-fourth of the total hydrogen peroxide charge is added followed by one-fourth of the total formic acid charge. A slow exotherm is typically observed after each hydrogen peroxide/formic acid addition with a maximum temperature of 60°C observed during the four addition steps.

The reaction is allowed to stir at a 50°C setpoint with periodic heating provided, as required, by the heating mantle and cooling provided, as required, by cool air from a heat gun. The mixture maintains a reaction temperature between 50-65°C by the exothermic heat of reaction over an additional 45 min of stirring.

At this time, the light orange colored reaction mixture is heated to a 60 °C setpoint and the stirring is increased to 800 rpm. Again, the exothermic heat of reaction maintains the reaction temperature at 60-65°C with only periodic external heating and/or air cooling for the next 1 h of reaction. The mixture is allowed to stir at 800 rpm and 60-65°C reaction temperature for a total of 8 h, then is allowed to cool to ambient temperature (25°C) with stirring. At 25°C, the mixture is a very faint yellow, opaque emulsion.

Ethyl acetate (100 mL) is added and the mixture is reheated to 60°C while stirring at 800 rpm. The warm solution is then transferred to a separatory funnel. Additional ethyl acetate (100 mL, 200 mL total) is used to rinse the reactor and further dilute the reaction mixture. The lower aqueous layer (54 g, pH = 1) is removed from the pale yellow organic layer. The organic layer is then washed four times with 100 mL portions of water for each wash. A small portion of ethyl acetate is added during each wash to aid in phase separation and to help clarify the layers. A very small emulsified rag layer is removed with each water wash separation. The final (fourth) water wash is approximately pH = 2.

The organic layer is then distilled using a rotary evaporator with the water bath temperature set at 60°C. The pressure is slowly reduced to 10-15 torr during the distillation until the bulk of the solvent removal is complete. The oil is further devolatilized at 60°C / 10-15 torr for 2 h, providing an epoxidized soybean product (217. 8 g) as a light yellow oil.

The epoxidized soybean oil (200.0 g, approximately 7 wt% epoxide oxygen, approximately 0.875 mol epoxide) and glacial acetic acid (105 g, 1.75 mol) are added to a 500-mL round bottomed flask. The mixture is swirled to provide a clear solution. DOWEX* MSC-1 ion exchange resin beads (50 g) are thoroughly rinsed sequentially with methylene chloride, methanol, water, methanol, then finally with methylene chloride. The beads are then briefly air-dried under vacuum, providing 37 g of rinsed and dried DOWEX* MSC-1 ion exchange resin beads. The ion exchange beads are added to the reaction mixture containing the epoxidized soybean oil and acetic acid. Water (31.3 g) is then added to the mixture, providing a slightly turbid liquid phase.

The flask is placed into a water bath at 70°C and the contents are mixed by rotation with an electric rotary evaporator motor. Within 3 h the initially turbid liquid phase becomes essentially clear. The reaction is allowed to stir at 70°C for 4.5 h, then is cooled to room temperature (25°C) and stirred an additional 16 h.

The mixture is reheated to 70°C and vacuum filtered through a fritted glass funnel to remove the ion exchange beads. The beads and filter are rinsed with ethyl acetate then rinsed extensively with water. The resultant filtrate is distilled on a rotary evaporator at 90°C bath temperature and <10 torr final vacuum over 3 h to provide 207.3 g of oil.

The oil is redissolved in glacial acetic acid (200 mL) and the recovered (rinsed and air dried) DOWEX* MSC-1 ion exchange resin beads are added. The mixture is allowed to react for 2.5 h at 90°C in a water bath using the same rotary mixing method as before. The beads are separated from the liquid product by vacuum filtration and the beads are rinsed with ethyl acetate and water. The resultant filtrate is distilled on a rotary evaporator at 90°C bath temperature and <10 torr final vacuum over 2-3 h to provide 203.6 g of clear, orange oil.

The functionalized initiator compound (clear orange oil) is propoxylated as follows.
Starting Reagents:
Functionalized Initiator compound (clear orange oil) (0.1212 g)
Propylene Oxide (0.5914 g)
3 wt% DMC slurry catalyst composition in 20:1 wt/wt Voranol* 2070 polyol/trimethylolpropane (0.0121 g, to provide 501 ppm of DMC catalyst in the product based upon total mass of reactants charged).

All reagents are charged into the reactor vial in a nitrogen atmosphere drybox and the polymerization is performed at 90°C for 21 h. After devolatilization for 30 min at 90 °C under a nitrogen sweep to remove any unreacted PO, the final fluid product mass is 0.7240 g. This corresponds to about 100% yield in the propoxylation reaction..

### Comparative Example 5. Propoxylation of Ring-opened Epoxidized Methyl Oleate

70% Methyl oleate (Sigma-Aldrich, Milwaukee, WI) (395 g) is added to a 1-liter Erlenmeyer flask with a magnetic stirbar. The flask containing the methyl oleate is heated to 50°C while stirring in a heated water bath. Aqueous 50% hydrogen peroxide solution (1132 g) and 90% formic acid (25.6 g) are each added sequentially in four equal portions to the well-stirred reaction mixture over 90 min. For each addition, one-fourth of the total hydrogen peroxide charge is added, followed by one-fourth of the total formic acid charge. A slight exotherm (typically 46°C) is observed after each addition of hydrogen peroxide/formic acid.

After the final hydrogen peroxide/formic acid charge, the reaction temperature continues to slowly increase to 65°C within the 50°C water bath. The mixture is allowed to stir within the 50°C water bath for an additional 8 h after the final hydrogen peroxide/formic acid addition, then the mixture is allowed to cool to room temperature and stir for 8 h.

The two-phase reaction mixture is slowly heated to 60°C over 3 h using a water bath. Ethyl acetate (200 mL) is added to the 60°C mixture and the warm solution is poured into a separatory funnel. Additional ethyl acetate (200 mL) and water (50 mL) are added and the organic and aqueous phases are allowed to separate. A slight emulsion (rag) layer is present at the organic/aqueous interface. The lower aqueous layer is separated along with rag layer.

The organic layer is washed six times with water (100 mL each wash). The organic layer is then distilled on a rotary evaporator at 60°C bath temperature while gradually increasing the vacuum to 20 torr. After the bulk of the solvent has been distilled, the resultant oil is further devolatilized at 60°C / 10-15 torr for 2.5 h. The final epoxidized methyl oleate product (417.3 g) is a clear, pale yellow oil.

The epoxidized methyl oleate (250 g) and methanol (250 g) are added to a 1-liter, three-necked round bottom flask equipped with a mechanical stirrer, condenser topped with nitrogen/vacuum inlet, heating mantle, and a thermocouple probe connected to an electronic temperature controller.

DOWEX* MSC-1 ion exchange resin beads (50.0 g) are thoroughly soaked and rinsed with methanol, then vacuum filtered and briefly air-dried under vacuum, providing 44.3 g of rinsed and dried DOWEX* MSC-1 ion exchange resin beads. The methanol treated beads are added to the reactor containing the epoxidized methyl oleate and methanol. While stirring at 300 rpm, the mixture is evacuated and back-filled with nitrogen six times to remove air. The mixture is then heated to 65°C and the stirring rate is increased to 500 rpm. The 65°C reaction mixture is allowed to stir at 500 rpm for 12 h. The mixture is then allowed to cool to 25°C and continue stirring at 500 rpm for an additional 5 h.

At room temperature (25°C), the reaction mixture consists of a clear, homogeneous, pale yellow solution plus resin beads. The mixture is vacuum filtered to remove the DOWEX* MSC-1 ion exchange resin beads and the beads are rinsed several times with methanol to remove entrained product. The combined filtrates are vacuum distilled with a slight nitrogen sweep on a rotary evaporator at 60°C bath temperature while gradually decreasing the pressure to 20 torr. After removal of the main methanol distillate, the mixture is further devolatilized for 3 h at 60°C / 10-15 torr with a slight vacuum sweep. The functionalized initiator compound (ring opened epoxidized methyl oleate) (261.6 g) is a clear, light golden-yellow oil with 4.374% hydroxyl by titration and an acid number of 0.02 meq/g.

The functionalized initiator compound (light golden-yellow oil) is propoxylated as follows.
Starting Reagents:
Functionalized initiator compound (0.1234 g)
Propylene Oxide (0.5934 g)
3 wt% DMC slurry catalyst composition in 20:1 wt/wt Voranol*207O polyol/trimethylolpropane (0.0125 g, to provide 514 ppm of DMC catalyst in the product based upon total mass of reactants charged).

All reagents are charged into the reactor vial in a nitrogen atmosphere drybox and the polymerization is performed at 90°C for 21 h. After devolatilization for 30 min at 90°C under a nitrogen sweep to remove any unreacted PO, the final fluid product mass is 0.7288 g. This corresponds to about 100% yield in the propoxylation reaction.

### Comparative Example 6. Propoxylation of Epoxidized-Ring Opened Oligomer of Oleic Acid

Oleic acid (Sigma-Aldrich, tech grade) (20 g) and acetic acid (1.42 g) are added to a 250-mL Erlenmeyer flask containing a magnetic stirbar. While stirring the mixture at 25°C, 96% sulfuric acid (1.6 g), the acid catalyst, is added slowly dropwise to the oleic acid/acetic acid mixture. The mixture turns slightly darker orange color upon adding the sulfuric acid. The reaction mixture is placed into a water bath at 40°C.

While stirring in the 40°C water bath, aqueous 30% hydrogen peroxide (8.20 g) is added in small portions over 15 min. The temperature of the mixture rises to 55°C and becomes light yellow during the early stages of hydrogen peroxide addition. The resultant light yellow emulsion is allowed to stir for 16.5 h within the 40°C water bath. During this additional reaction time, the mixture becomes an unstirrable cream-colored paste.

The unstirrable paste is slowly heated within the water bath from 40°C to 75°C and is allowed to react for 2 h. Upon heating to 75°C, the mixture becomes a stirrable solution (emulsion). Water (100 mL) is then added to the 75°C emulsion, causing the temperature to decrease to 55°C. The reaction mixture is then removed from the water bath and allowed to further cool while stirring. As the temperature decreases to approximately 50°C, a solid begins to form within the mixture making magnetic stirring difficult.

Ethyl acetate (75 mL) is added, providing a clear, upper organic layer plus aqueous layer. The mixture is transferred to a separatory funnel and the lower aqueous layer is removed. The organic layer is further washed 3 times with water. Small portions of additional ethyl acetate are added during each water wash to maintain a clear organic layer. The organic layer is then distilled using a rotary evaporator with the water bath maintained at 80°C to keep the product molten. The pressure is slowly reduced during the distillation until the bulk of the solvent removal is complete. The molten product is further devolatilized at 80°C / 10-15 torr, providing a clear, viscous, pale yellow oil (21.8 g) when hot. The oil solidifies to a light colored solid upon cooling.

The functionalized initiator compound (pale yellow oil) is propoxylated as follows.
Starting Reagents:
Functionalized initiator compound (0.1226 g)
Propylene Oxide (0.5941 g)
3 wt% DMC slurry catalyst composition in 20:1 wt/wt Voranol* 2070 polyol/trimethylolpropane (0.0486 g, to provide 1940 ppm of DMC catalyst in the product based upon total mass of reactants charged).

All reagents are charged into the reactor vial in a nitrogen atmosphere drybox and the polymerization is performed at 90 °C for 21 h. After devolatilization for 30 min at 90 °C under a nitrogen sweep to remove any unreacted PO, the final fluid product mass is 0.7653 g. This corresponds to 100% yield in the propoxylation reaction.

### Comparative Example 7: Propoxylation of an Epoxidized/Partial_Ring Opened Oligomer of Oleic Acid

Oleic acid (Sigma-Aldrich, tech grade) (290 g) is added to a 500-mL, three-necked round bottom flask equipped with a mechanical stirrer, glass-stoppered addition port, heating mantle, and a thermocouple probe connected to an electronic temperature controller. The mixture is heated to 50°C and stirred at 700 rpm. Aqueous 50% hydrogen peroxide (74.8 g total) and 90% formic acid (16.9 g total) are each added sequentially in four portions to the reaction mixture at 50°C and 700 rpm stirring over a 2 h addition period with 30-50 min between additions. In each addition, one-fourth of the total hydrogen peroxide charge is added followed by one-fourth of the total formic acid. The formic acid acts as the epoxidation catalyst and a portion may react with the epoxidized oleic acid. A slow exotherm is typically observed after each hydrogen peroxide/formic acid addition with a maximum temperature of 61°C observed during the four addition steps.

The reaction is allowed to stir at a 50°C setpoint with periodic heating provided, as required, by the heating mantle and cooling provided, as required, by cool air from a heat gun. The mixture maintains a reaction temperature between 50-60°C by the exothermic heat of reaction over an additional 1.5 h of stirring.

At this time, the light peach colored reaction mixture is heated to a 60°C setpoint. Again, the exothermic heat of reaction maintains the reaction temperature at 60-65°C with only periodic external heating and/or air cooling. The mixture is allowed to stir at 700 rpm and 60-65°C reaction temperature for an additional 3 h until the exothermic nature of the reaction subsides.

The stirring is then increased to 800 rpm and the mixture is stirred at 60°C for an additional 5 h, then is allowed to cool to ambient temperature. At 25°C, the mixture is comprised of a slightly pasty, light pink emulsion. Ethyl acetate (100 mL) is added and the mixture is transferred to a separatory funnel. Additional ethyl acetate (300 mL, 400 mL total) is used to rinse the reactor and further dilute the reaction mixture. The cloudy organic layer becomes clear with slight warming using a heat gun. The lower aqueous layer (20 mL) is removed from the light peach colored organic layer.

The organic layer is then washed five times with 100 mL portions of water. A very small emulsified rag layer is removed with each water wash separation. The organic layer is then distilled u.sing a rotary evaporator with the water bath temperature set at 60°C. The pressure is slowly reduced to 10-15 torr during the distillation until the bulk of the solvent removal is completed over a 2.5 h distillation period. The molten product is further devolatilized at 70°C / 10-15 torr for 30 min, providing a peach-colored oil (317.1 g) when hot. The oil solidifies to a peach-colored solid upon cooling. The functional initiator has 5.038% OH and an acid number of 2.313 meq/g.

The functionalized initiator compound (peach colored solid) is propoxylated as follows.
Starting Reagents:
functionalized initiator compound (0.1223 g)
Propylene Oxide (0.7880 g)
3 wt% DMC slurry catalyst composition in 20:1 wt/wt Voranol* 2070 polyol/trimethylolpropane (0.0121 g, to provide 394 ppm of DMC catalyst in the product based upon total mass of reactants charged).

All reagents are charged into the reactor vial in a nitrogen atmosphere drybox and the polymerization is performed at 90°C for 21 h. After devolatilization for 30 mim at 90°C under a nitrogen sweep to remove any unreacted PO, the final fluid product mass is 0.7466 g. This corresponds to about 78% yield in the propoxylation reaction.

### Comparative Example 8. Propoxylation of an Epoxidized/Partial Rine-Opened Oligomerized Oleic Acid/Adinic Acid Mixture

Oleic acid (Sigma-Aldrich, tech grade) (270 g) and adipic acid (30 g) are added to a 1-liter, three-necked round bottom flask equipped with a mechanical stirrer, glass-stoppered addition port, heating mantle, and a thermocouple probe connected to an electronic temperature controller. The adipic acid is not completely soluble in the reaction mixture at 25°C.

A first portion of aqueous 30% hydrogen peroxide (19.1 g) is added to the oleic acid/adipic acid mixture at 25°C while stirring at 600 rpm. Aqueous 50% sulfuric acid (40 g), the acid catalyst, is then added to the stirred mixture at 25°C. The reaction temperature increases to 30°C upon adding the sulfuric acid.

The mixture is then heated to 50°C setpoint while stirring at 600 rpm. The temperature rises to 58°C due to additional exothermic heat of reaction. After 30 min of reaction, a second portion of aqueous 30% hydrogen peroxide (25.0 g) is added to the reaction mixture at 50°C. After stirring for 1.5 h at 50°C, third (31.5 g) and fourth (43.3 g) portions of aqueous 30% hydrogen peroxide are added to the stirred reaction mixture at 50°C. A total of 118.9 g of 30% hydrogen peroxide are added over the 2 h reaction period.

A chilled condenser is substituted for the glass-stopper and the mixture is heated slowly in stages to 80°C setpoint over 1 h. A slow but persistent exotherm require s alternate heating and occasional cooling of the reactor to maintain the reaction temperature at 80-85°C. After 1 h, the temperature has stabilized and is maintained at 80°C with external heating using the heating mantle. The peach-colored emulsion is allowed to react for an additional 14 h at 80°C while stirring at 600 rpm.

Ethyl acetate (200 mL) is added to the peach-colored emulsion at 80°C while stirring at 600 rpm. Stirring is then reduced to 250 rpm and the mixture is allowed to cool to 25°C. The mixture is transferred to a separatory funnel A small amount of solid is observed in the product mixture. Additional ethyl acetate (500 mL, 700 mL total) is used to rinse the reactor and further dilute the reaction mixture. The lower aqueous layer is removed from the light peach colored organic layer.

The organic layer is then washed several times with warm (60-80°C) water. The solid in the organic layer dissolves as the organic phase is heated by the warm water washes. The organic layer is distilled using a rotary evaporator with the water bath temperature set at 80°C. The pressure is slowly reduced to 10-15 torr during the distillation until the bulk of the solvent removal is. The molten product is further devolatilized at 80°C/10-15 torr, providing a pale yellow oil (310.5 g) when hot. The oil solidifies to a white solid upon cooling. The functionalized initiator compound has 4.704% OH and an acid number of 3.239 meq/g.

The functionalized initiator compound (white solid) is propoxylated as follows.
Starting Reagents:
Functionalized initiator (white solid) (0.1211 g)
Propylene Oxide (0.7872 g)
3 wt% DMC slurry catalyst composition in 20:1 wt/wt Voranol* 2070 polyol/trimethylolpropane (0.0121 g, to provide 394 ppm of DMC catalyst in the product based upon total mass of reactants charged).

All reagents are charged into the reactor vial in a nitrogen atmosphere drybox and the polymerization is performed at 90°C for 21 h according to the described testing method. After devolatilization for 30 min at 90°C under a nitrogen sweep to remove any unreacted PO, the final fluid product mass is 0.9205 g. This corresponds to 100% yield in the propoxylation reaction.

### Comparative Example 9. Propoxylation of Formoxylated Methyl Oleate

Methyl oleate (Aldrich, tech grade) (300 g) and propyl acetate (50 g) are added to a 1-liter, three-necked round bottomed flask equipped with a mechanical stirrer, condenser topped with a vacuum/nitrogen inlet, heating mantle, and a thermocouple probe connected to an electronic temperature controller.

While stirring at 300 rpm, 95-97% formic acid (400 g) is added to the methyl oleate/propyl acetate mixture. Addition of the first approximately one-half of the formic acid provides a homogeneous solution. Addition of the remaining formic acid charge provides a two-phase mixture. Aqueous 70% perchloric acid (1 g) is added to the two-phase mixture while stirring. The two-phase mixture turns darker brown upon adding the perchloric acid.

The stirring rate is increased to 500 rpm and the mixture is evacuated then refilled with nitrogen 10 times to remove air. The mixture is then heated to 100°C while stirring at 500 rpm under nitrogen. As the temperature increases, the mixture becomes much darker colored and more homogeneous. At 90-95°C, the mixture is dark red-brown and essentially homogeneous.

The mixture is allowed to react at 100°C for 19 h while stirring at 500 rpm under nitrogen. The very dark brown solution is then cooled to 60°C and water (200 mL total) is added in 4 X 50 mL portions. Each 50 mL charge of water provides more phase separation into a dark upper layer and lighter colored, principally aqueous lower layer. The two-phase mixture is allowed to cool to 25°C and is poured into a separatory funnel using ethyl acetate (50 mL) to rinse the reactor.

The lower aqueous layer (508 g) is separated from the dark upper organic layer and retained. The dark organic layer is washed with water (200 mL) and the colorle ss, lower aqueous phase is combined with the previously separated aqueous layer (739 g total). The organic layer is washed a second time with water (100 mL), which is combined with the previous aqueous layers (855 g total). The organic layer is transferred to an Erlenmeyer flask with ethyl acetate rinses of the separatory funnel.

The combined aqueous layer is transferred to a separatory funnel. Ethyl acetate (100 mL) is added with no phase separation. Propyl acetate (100 mL) is added again with no phase separation. Addition of dichloromethane (50 L) eventually provides phase separation as a minor, orange upper layer plus major, pale yellow lower layer. The lower layer (850 g) is phase separated and discarded. The upper layer is washed with water (50 g) and the clear, colorless water layer is separated and discarded. The orange organic layer is combined with the previously washed organic layer in the Erlenmeyer flask.

Water (200 mL) is added to the organic layer in the Erlenmeyer flask. Calcium carbonate (25 g total) is added in small portions while stirring until the aqueous layer is neutralized. The mixture is transferred to a separatory funnel and the aqueous phase is removed along with an emulsion ("rag") layer at the phase interface. The organic layer is then washed twice with water (200 mL each wash) with a small rag layer removed with each water wash.

The organic layer is distilled using a rotary evaporator with the water bath temperature set at 60°C. The pressure is slowly reduced to 10-15 torr during the distillation until the bulk of the solvent is removed. The product is further devolatilized at 60°C / 10-15 torr, providing a dark brown oil (310.3 g) when hot. Some solid precipitate forms in the mixture upon cooling to room temperature.

Product from formoxylation of methyl oleate (50.0 g) and methanol (45.0 g) are added to a single necked 250-mL round bottomed flask. The mixture is swirled to provide a homogeneous, light brown solution. 96% Sulfuric acid (0.48 g), the acid catalyst, is added, providing a slightly darker solution. The flask is placed into a 60°C water bath on a rotoevaporator to allow for rotational mixing. The mixture is stirring by rotating within the water bath at 60°C for 16 h.

The mixture is transferred to a separatory funnel along with ethyl acetate (100 mL) used for reactor rinsing. The dark organic layer is washed with water (100 mL) and the lower aqueous phase is separated. The organic layer is then washed several times with additional portions (50 mL each) of water.

The organic layer is distilled using a rotary evaporator with the water bath temperature set at 80°C. The pressure is slowly reduced to 10 torr during the distillation until the bulk of the solvent is removed. The functionalized initiator compound product is further devolatilized at 80°C / 10 torr for 2 h, providing a clear, dark orange-brown oil (48.5 g).

The functionalized initiator compound (clear dark orange-brown oil) is propoxylated as follows.
Starting Reagents:
Functionalized initiator, (dark orange-brown oil) (0.1202 g)
Propylene Oxide (0.5939 g)
3 wt% DMC slurry catalyst composition in 20:1 wt/wt Voranol* 2070 polyol/trimethylolpropane (0.0122 g, to provide 504 ppm of DMC catalyst in the product based upon total mass of reactants charged)

All reagents are charged into the reactor vial in a nitrogen atmosphere drybox and the polymerization is performed at 90°C for 21 h. After devolatilization for 30 min at 90 °C under a nitrogen sweep to remove any unreacted PO, the final fluid product mass is 0.7262 g. This corresponds to 100% yield in the propoxylation reaction.

### Comparative Example 10. Propoxylation of a Formoxylated Methyl Oleate, which was created with Hydrogen Peroxide

Methyl oleate (Aldrich, tech grade) (254.0 g) and propyl acetate (50 g) are added to a 1-liter, three-necked round bottomed flask equipped with a mechanical stirrer, condenser topped with a vacuum/nitrogen inlet, heating mantle, and a thermocouple probe connected to an electronic temperature controller.

While stirring at 300 rpm, 95-97% formic acid (95.9 g) is added to the methyl oleate/propyl acetate mixture, providing a clear, homogeneous, orange solution. Aqueous 70% perchloric acid (0.5 g) is added to the mixture while stirring. The homogeneous mixture turns darker orange-brown upon adding the perchloric acid.

The stirring rate is increased to 400 rpm and the mixture is evacuated then refilled with nitrogen 8 times to remove air. The mixture is then heated to 100°C while stirring at 400 rpm under nitrogen. As the temperature increases, the mixture becomes much darker colored. At 100°C, the mixture is dark red-brown.

The mixture is allowed to react at 100°C for 8 h while stirring at 400 rpm under nitrogen. The heating is then turned off and the mixture is allowed to cool to 25 °C and stir for an additional 13 h. Water (150 g) is added to the dark brown reaction mixture while stirring, providing a lighter orange-brown solution. Aqueous 50% hydrogen peroxide (17 g) is added to the 25°C solution. The stirring is increased to 600 rpm and the mixture is heated to a 50°C setpoint. The mixture is stirred at 50°C for 1 h 45 min, providing a light orange emulsified solution.

A second portion of 50% hydrogen peroxide (17 g, 34 g total) is then added to the 50°C mixture while stirring at 600 rpm. The mixture is allowed to stir at 50°C for 15 min, then the temperature is increased to 70°C. The mixture is stirred at 70°C for 50 min. A final portion of 50% hydrogen peroxide (14.5 g, 48.5 g total) is added to the bright yellow reaction mixture at 70°C. The mixture is allowed to react at 70°C for an additional 2.5 h while stirring at 600 rpm. Heating and stirring is stopped and the mixture is allowed to cool to 25°C.

The reaction mixture is transferred to a separatory funnel along with ethyl acetate reactor rinses (50 mL). The organic layer is washed four times with water. Powdered zinc oxide is added in small portions to the organic layer until the solution is neutral to litmus paper. The organic layer is then washed three additional times with water. The organic layer is distilled using a rotary evaporator with the water bath temperature set at 60°C. The pressure is slowly reduced to 20 torr during the distillation until the bulk of the solvent is removed. The product is further devolatilized at 60°C / 10-15 torr for 3 h, providing a dark golden oil (273.2 g). Some haziness develops in the mixture upon cooling to room temperature.

The product, dark golden oil, (200.0 g) is added to a 1-liter, three-necked round bottomed flask equipped with a mechanical stirrer, a Dean-Stark trap fitted with a condenser topped with a nitrogen inlet, heating mantle, and a thermocouple probe connected to an electronic temperature controller. The reactor contents are heated to 60°C while stirring at 400 rpm.

A solution of 96% sulfuric acid (1.90 g), the functionalization catalyst, dissolved in methanol (179 g) is added to the 60°C reactor contents while stirring at 400 rpm, providing a clear, orange solution. Within 5 min, some bubbling and slight reflux is observed within the 60°C reaction mixture. The reaction temperature is increased to 64°C to allow for separation and collection of overhead distillate (16 mL) over 1 h. The reflux and bubbling within the reaction mixture diminishes significantly toward the end of this time period.

The reaction temperature is increased to 66°C to allow for separation and collection of additional overhead distillate (15 mL) over 1 h. The reaction temperature is then increased to 70°C to allow for separation and collection of additional overhead distillate (23 mL) over 1 h. The heat is then turned off and the reaction mixture is allowed to cool to 25°C.

The mixture is transferred to a separatory funnel along with ethyl acetate (100 mL) used for reactor rinsing. The dark amber organic layer is washed extensively with water until the aqueous washes are only slightly acidic to neutral by litmus paper. The organic layer is distilled using a rotary evaporator with the water bath temperature set at 60°C. The pressure is slowly reduced to 20 torr during the distillation until the bulk of the solvent is removed. The product is further devolatilized at 60°C / 10-15 torr, providing a dark amber-orange oil (199.5 g) when hot. Some crystallization is observed as the product, functionalized initiator, cools to ambient temperature.

The functionalized initiator compound (dark amber-orange oil) is propoxylated as follows.
Starting Reagents:
Functionalized initiator, dark amber-orange oil (0.1233 g)
Propylene Oxide (0.5924 g)
3 wt% DMC slurry catalyst composition in 20:1 wt/wt Voranol* 2070 polyol/trimethylolpropane (0.0120 g, to provide 495 ppm of DMC catalyst in the product based upon total mass of reactants charged).

All reagents are charged into the reactor vial in a nitrogen atmosphere drybox and the polymerization is performed at 90°C for 21 h. After devolatilization for 30 min at 90°C under a nitrogen sweep to remove any unreacted PO, the final fluid product mass is 0.7280 g. This corresponds to about 100% yield in the propoxylation reaction.

### Comparative Example 11. Propoxylation of a Rine Opened Diels-Alder Adduct of a Fatty Acid Methyl Ester (FAME)

Soybean oil (600.0) is added to a 1-liter, three-necked round bottomed flask equipped with a mechanical stirrer, a chilled condenser topped with a nitrogen inlet, heating mantle, and a thermocouple probe connected to an electronic temperature controller. The reactor contents are heated to 50°C while stirring at 400 rpm.

Sodium hydroxide pellets (1.21 g) are added to methanol (131.7 g) in a septum-capped Erlenmeyer flask fitted with a magnetic stirbar. The mixture is stirred with slight warming until the sodium hydroxide dissolves. The solution of sodium hydroxide in methanol is then added to the stirred 50°C soybean oil in the 1-liter reactor along with a small methanol rinse of the Erlenmeyer flask. The combined mixture is heated to 60°C setpoint and the stirring is increased to 700 rpm.

The emulsified yellow mixture is stirred at 60 °C for 5 min, then the temperature is increased to 70°C. The mixture is allowed to react at 70°C for 3.5 h while stirring at 700 rpm. The mixture remains emulsified while stirred during the entire reaction period at 70°C. When the stirring is stopped, the mixture phase separates into two clear phases.

The mixture is allowed to cool to room temperature and transferred to a separatory funnel with methanol rinses. The methanol rinses produce an emulsion layer from the previous clear, two phase mixture. Water is then added, but this does not assist in breaking the emulsion layer. Hydrochloric acid is added until the lower aqueous phase is slightly acidic to litmus paper. This likewise does not assist in breaking the emulsion layer.

Ethyl acetate is added, providing some improved phase separation. The lower aqueous layer is phase separated from the main, upper organic layer. The aqueous layer is extracted with ethyl acetate, providing a clear, lower aqueous phase and a yellow, upper organic phase. The aqueous layer is separated and discarded. The ethyl acetate extract is combined with the previously separated organic layer.

The combined organic phase is repeatedly washed with water until the water washes are no longer acidic to litmus paper. The organic layer is distilled using a rotary evaporator with the water bath temperature set at 60°C. The pressure is slowly reduced to 20 torr during the distillation until the bulk of the solvent is removed. The FAME product is further devolatilized at 70°C / 10-15 torr for 3 h, providing a light yellow, relatively clear oil (605.6 g).

The FAME product (300 g) is added to a 1-liter two-necked flask fitted with a 55°C condenser topped with a vacuum/nitrogen inlet, heating mantle, magnetic stirbar, and a thermocouple probe connected to an electronic temperature controller. While stirring, the reactor is evacuated then refilled with nitrogen several times to remove air.

A solid chunk of iodine (1.20 g), the functionalizing catalyst, is added to the reactor at 25°C while stirring under a pad of nitrogen. The mixture turns reddish-orange as the iodine dissolves in the FAME. The mixture is heated to 175°C setpoint over 30 min. The mixture gradually becomes lighter yellow as the mixture is heated and is light yellow in color at 175°C. The temperature setpoint is then increased to 250 °C. After reaching 250°C, the mixture is allowed to react with stirring for 30 min. A slight amount of condensate is observed above the 55°C condenser.

A second portion of iodine (0.30 g, 1.50 g total) is added in a single portion at 250°C. After an initial slight exotherm (6-8°C) and slight darkening, the mixture rapidly becomes light yellow. A two-way adapter is added between the nitrogen inlet and condenser to allow for continuous nitrogen sweep above the 55°C condenser. After 30 min of additional stirring, a third portion of iodine (0.30 g, 1.80 g total) is added at 250°C. Essentially no exotherm is observed after this iodine addition. The slightly darker yellow mixture is allowed to stir for 10 min, then the heating is turned off and the mixture is cooled to 25°C. The mixture is allow to stir at 25°C for 18 h under a nitrogen pad/sweep.

Maleic anhydride (49.0 g) is added to the mixture at 25°C. The mixture is heated to 225°C over 20 min with stirring. The reaction temperature continues to rise to 247°C over 5 min, then slowly decreases to 246°C within 5 min. The heating is resumed with the setpoint increased from 225°C to 250°C. The amber-orange mixture is allowed to stir at 250°C for an additional 30 min.

A final portion of iodine (0.30 g, 2.10 g total) is then added to the dark reaction mixture at 250°C. A very minor exotherm (<1 °C) is observed. After an additional 30 min at 250°C, the heating is stopped and the dark amber-brown oil is transferred to a storage container.

The dark amber-brown oil (20 g) and 1,2-propanediol (10 g) are added to a heavy-walled glass pressure tube with a magnetic stirbar. The pressure tube is sealed with a threaded Teflon® plug with an o-ring seal. The tube is placed into an aluminum heating block and the mixture is magnetically stirred at 130°C for 16.5 h. The product is cooled to room temperature and transferred to an addition funnel using ethyl acetate as a solvent. The organic layer is washed several times with water to remove excess 1,2-propanediol. The organic layer is then distilled using a rotary evaporator with the water bath temperature set at 60°C. The pressure is slowly reduced to 20 torr during the distillation until the bulk of the solvent is removed. The product is further devolatilized at 60°C / 10-15 torr to provide the ring opened Diels-Alder adduct of the FAME.

The functionalized initiator compound (ring opened Diels-Alder adduct of the FAME) is propoxylated as follows.
Starting Reagents:
Functionalized Initiator (0.1207 g)
Propylene Oxide (0.5933 g)
3 wt% DMC slurry catalyst composition in 20:1 wt/wt Voranol* 2070 polyol/trimethylolpropane (0.0123 g, to provide 508 ppm of DMC catalyst in the product based upon total mass of reactants charged).

All reagents are charged into the reactor vial in a nitrogen atmosphere drybox and the polymerization is performed at 90°C for 21 h. After devolatilization for 30 min, at 90°C under a nitrogen sweep to remove any unreacted PO, the final fluid product mass is 0.5604 g. This corresponds to about 72% yield in the propoxylation reaction.

## Claims

1. A process for preparing a polyether, comprising;
(i) forming a functionalized initiator compound by reacting a precursor initiator compound with a functionalizing compound and a functionalizing catalyst to form the functionalized initiator compound, wherein the precursor initiator compound is a vegetable oil, animal fat, fatty acid or alkyl ester of the fatty acid and wherein the functionalized initiator compound is a hydroxymethylated vegetable oil, animal fat, fatty acid or alkyl ester of the fatty acid
(ii) forming a mixture of the functionalized initiator compound containing at least a portion of the functionalizing catalyst from step (i), an alkylene oxide and a double metal cyanide catalyst complex, and,
(iii) subjecting the mixture to conditions sufficient to activate the catalyst complex and to alkoxylate the functionalized initiator compound to form the polyether.

2. The process of claim 1 wherein the precursor initiator compound is an animal fat, vegetable oil or modified animal fat, modified vegetable oil or combination thereof.

3. The process of claim 1 wherein the functionalized initiator compound is a modified vegetable oil that is a polyol comprised of 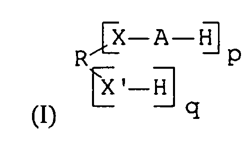 and
(II) R⁅X-A-H]ₜ
where R is a residue of a polyol, polyamine or aminoalcohol initiator; X and X' may the same or different and is O, N or NH; p is an integer from 1 to 5; q is an integer from 1 to 5 wherein p + q is from 3 to 8, t is an integer from 3 to 8 and A may be the same or different and is selected from the group consisting of A1, A2 and A3 where
A1 is 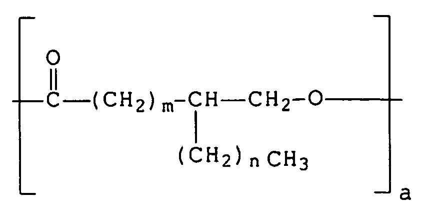 A2 is 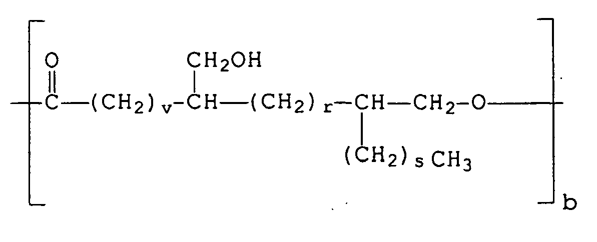 A3 is 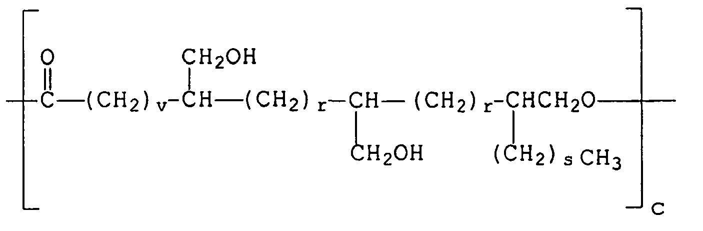 where m, n, v, r, s, a, b and c are integers and m is greater than 3, n greater than or equal to zero and m+n is from 11 to 19, v is greater than 3, r is greater than or equal to zero, s is greater than or equal to zero and v+r+s is from 10 to 18, a is from 0 to 35, b is from 0 to 35 and c is from 0 to 35, so long as that all a's, b's and c's in any molecule of the vegetable oil based polyol are not all zero and (a+b+c)/(p+q+t) is greater than 0 to about 100 in the vegetable oil based polyol.

4. The process of claim 1 wherein the alkylene oxide is ethylene oxide.

5. The process of claim 1 wherein the alkylene oxide is propylene oxide or 1,2-butylene oxide.

6. The process of claim 1 wherein the functionalizing catalyst is an acid.

7. The process of claim 1 wherein the functionalizing catalyst is iodine.

8. The process of claim 1 wherein the initiator compound in step (ii) contains at least 25% of the functionalizing catalyst used in step (i).

9. The process of claim 8 wherein the initiator compound in step (ii) contains at least about 50% of the functionalizing catalyst used in step (i).

10. The process of claim 9 wherein the initiator compound in step (ii) contains essentially all of the functionalizing catalyst of step (i).

11. The process of claim 1 wherein the polyether contains at least about 10 parts per million by weight of the functionalizing catalyst.

12. The process of claim 11 wherein the polyether contains at least about 50 parts per million by weight of the functionalizing catalyst.

13. A polyether composition comprised of the polyether prepared according to claim 1, the functionalizing catalyst and the double metal cyanide catalyst.

14. The polyether composition of claim 13 wherein the polyether composition contains at least about 10 parts per million by weight of the functionalizing catalyst.

15. The polyether composition of claim 14 wherein the polyether composition contains at least about 50 parts per million by weight of the functionalizing catalyst.

16. The polyether of claim 13 wherein the functionalized initiator compound is a hydroxymethylated vegetable oil, hydroxymethylated animal fat or combination thereof.

17. The polyether of claim 16 wherein the functionalized initiator compound is a hydroxymethylated vegetable oil that is a polyol comprised of 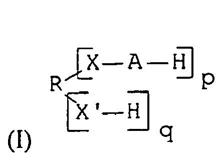 and
(II) R⁅X-A-H]ₜ
where R is a residue of a polyol, polyamine or aminoalcohol initiator; X and X' may the same or different and is O, N or NH; p is an integer from 1 to 5; q is an integer from 1 to 5 wherein p + q is from 3 to 8, t is an integer from 3 to 8 and A may be the same or different and is selected from the group consisting of A1, A2 and A3 where
A1 is 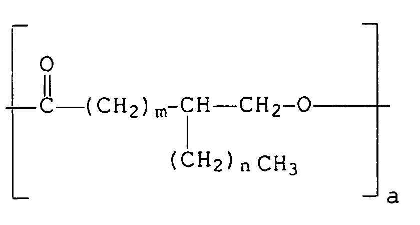 A2 is 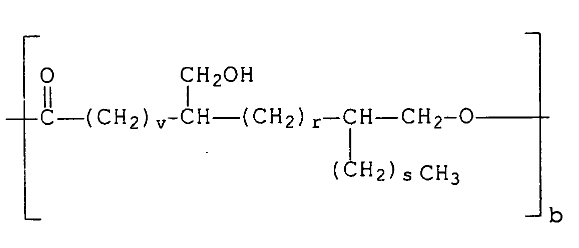 A3 is 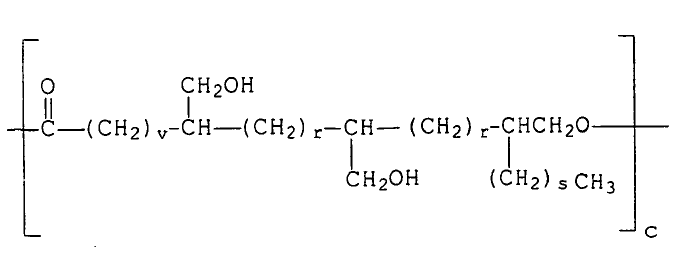 where m, n, v, r, s, a, b and c are integers and m is greater than 3, n greater than or equal to zero and m+n is from 11 to 19, v is greater than 3, r is greater than or equal to zero, s is greater than or equal to zero and v+r+s is from 10 to 18, a is from 0 to 35, b is from 0 to 35 and c is from 0 to 35, so long as that all a's, b's and c's in any molecule of the vegetable oil based polyol are not all zero and (a+b+c)/(p+q+t) is greater than 0 to about 100 in the vegetable oil based polyol.

18. The polyether of Claim 13 wherein the functionalized initiator compound is a hydroxymethylated fatty acid alkyl ester or hydroxymethylated fatty acid.

19. An initiator composition comprising a functionalized initiator compound, a double metal cyanide catalyst complex and at least about 10 parts per million of tin, titanium, rhodium, nickel, an enzyme, an acid, iodine or a combination thereof, wherein the initiator compound is a modified vegetable oil that is a polyol comprised of 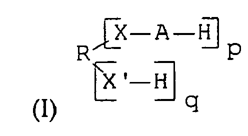 and
(II) R⁅X-A-H]ₜ
where R is a residue of a polyol, polyamine or aminoalcohol initiator; X and X' may the same or different and is O, N or NH; p is an integer from 1 to 5; q is an integer from 1 to 5 wherein p + q is from 3 to 8, t is an integer from 3 to 8 and A may be the same or different and is selected from the group consisting of A1, A2 and A3 where
A1 is 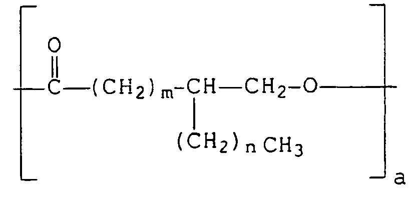 A2 is 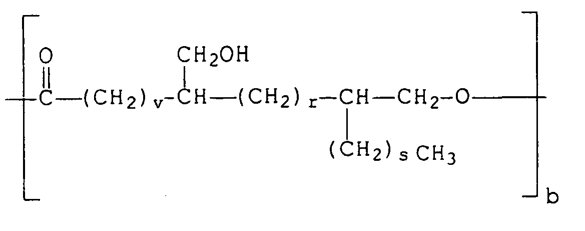 A3 is 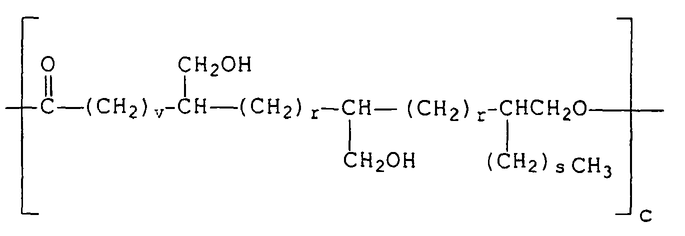 where m, n, v, r, s, a, b and c are integers and m is greater than 3, n greater than or equal to zero and m+n is from 11 to 19, v is greater than 3, r is greater than or equal to zero, s is greater than or equal to zero and v+r+s is from 10 to 18, a is from 0 to 35, b is from 0 to 35 and c is from 0 to 35, so long as that all a's, b's and c's in any molecule of the vegetable oil based polyol are not all zero and (a+b+c)/(p+q+t) is greater than 0 to about 100 in the vegetable oil based polyol.

20. A process comprising forming a mixture of at least one alkylene oxide with the initiator composition of claim 19, and subjecting the mixture to conditions sufficient to activate the catalyst complex and to alkoxylate the initiator compound to form the polyether.

## Patentansprüche

1. Verfahren zur Herstellung eines Polyethers, mit den folgenden Schritten:
(i) Bilden einer funktionalisierten Initiatorverbindung durch Umsetzen einer Vorläufer-Initiatorverbindung mit einer Funktionalisierungsverbindung und einem Funktionalisierungskatalysator, um die funktionalisierte Initiatorverbindung zu bilden, wobei die Vorläufer-Initiatorverbindung ein Pflanzenöl, ein tierisches Fett, eine Fettsäure oder ein Alkylester der Fettsäure ist und wobei die funktionalisierte Initiatorverbindung ein hydroxymethyliertes Pflanzenöl, hydroxymethyliertes tierisches Fett, hydroxymethylierte Fettsäure oder hydroxymethylierter Alkylester der Fettsäure ist,
(ii) Bilden einer Mischung der wenigstens einen Teil des Funktionalisierungkatalysators von Schritt (i) enthaltenden funktionalisierten Katalysatorverbindung, eines Alkylenoxids und eines Doppelmetallcyanid-Katalysatorkomplexes, und
(iii) die Mischung Bedingungen unterwerfen, die ausreichen, um den Katalysatorkomplex zu aktivieren und die funktionalisierte Initiatorverbindung zu alkoxylieren, um den Polyether zu bilden.

2. Verfahren nach Anspruch 1, wobei die Vorläufer-Initiatorverbindung ein tierisches Fett, Pflanzenöl oder modifiziertes tierisches Fett, modifiziertes Pflanzenöl oder eine Kombination davon ist.

3. Verfahren nach Anspruch 1, wobei die funktionalisierte Initiatorverbindung ein modifiziertes Pflanzenöl ist, das ein aus 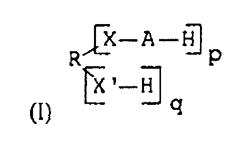 und
(II) R⁅X-A-H]ₜ
bestehendes Polyol ist, wo R ein Rest eines Polyol-, Polyamin- oder Aminoalkoholinitiators ist; X und X' gleich oder verschieden sein können und O, N oder NH sind; p eine ganze Zahl von 1 bis 5 ist; q eine ganze Zahl von 1 bis 5 ist, wobei p+q von 3 bis 8 ist, t eine ganze Zahl von 3 bis 8 ist und A gleich oder verschieden sein kann und aus der aus A1, A2 und A3 bestehenden Gruppe ausgewählt ist, wo
A1 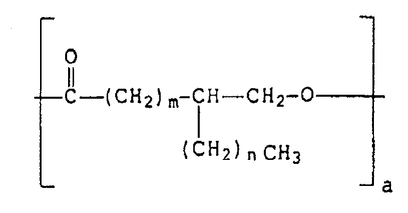 ist,
A2 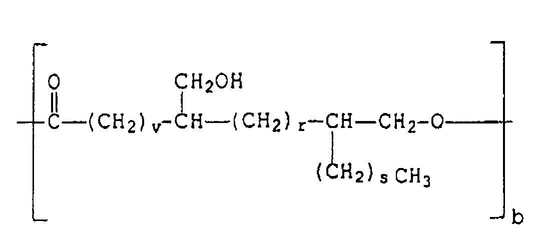 ist,
A3 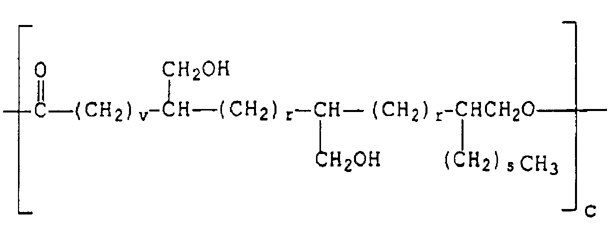 ist,
wo m, n, v, r, s, a, b und c ganze Zahlen sind und m größer ist als 3, n größer oder gleich null ist und m+n von 11 bis 19 ist, v größer ist als 3, r größer oder gleich null ist, s größer oder gleich null ist und v+r+s von 10 bis 18 ist, a von 0 bis 35 ist, b von 0 bis 35 ist und c von 0 bis 35 ist, solange alle a's, b's und c's in einem Molekül des Polyols auf Pflanzölbasis nicht alle null sind und (a+b+c)/(p+q+t) größer als 0 bis etwa 100 in dem Polyol auf Pflanzenölbasis ist.

4. Verfahren nach Anspruch 1, wobei das Alkylenoxid Ethylenoxid ist.

5. Verfahren nach Anspruch 1, wobei das Alkylenoxid Propylenoxid oder 1,2-Butylenoxid ist.

6. Verfahren nach Anspruch 1, wobei der Funktionalisierungskatalysator eine Säure ist.

7. Verfahren nach Anspruch 1, wobei der Funktionalisierungskatalysator Iod ist.

8. Verfahren nach Anspruch 1, wobei die Initiatorverbindung in Schritt (ii) mindestens 25% des in Schritt (i) verwendeten Funktionalisierungskatalysators enthält.

9. Verfahren nach Anspruch 8, wobei die Initiatorverbindung in Schritt (ii) mindestens etwa 50% des in Schritt (i) verwendeten Funktionalisierungskatalysators enthält.

10. Verfahren nach Anspruch 9, wobei die Initiatorverbindung in Schritt (ii) im Wesentlichen den gesamten Funktionalisierungskatalysator von Schritt (i) enthält.

11. Verfahren nach Anspruch 1, wobei der Polyether mindestens etwa 10 Gewichtsteile pro Million des Funktionalisierungskatalysators enthält.

12. Verfahren nach Anspruch 11, wobei der Polyether mindestens etwa 50 Gewichtsteile pro Million des Funktionalisierungskatalysators enthält.

13. Polyetherzusammensetzung, die aus dem nach Anspruch 1 hergestellten Polyether, dem Funktionalisierungskatalysator und dem Doppelmetallcyanidkatalysator besteht.

14. Polyetherzusammensetzung nach Anspruch 13, wobei die Polyetherzusammensetzung mindestens etwa 10 Gewichtsteile pro Million des Funktionalisierungskatalysators enthält.

15. Polyetherzusammensetzung nach Anspruch 14, wobei die Polyetherzusammensetzung mindestens etwa 50 Gewichtsteile pro Million des Funktionalisierungskatalysators enthält.

16. Polyetherzusammensetzung nach Anspruch 13, wobei die funktionalisierte Initiatorverbindung ein hydroxymethyliertes Pflanzenöl, hydroxymethyliertes tierisches Fett oder eine Kombination davon ist.

17. Polyether nach Anspruch 16, wobei die funktionalisierte Initiatorverbindung ein hydroxymethyliertes Pflanzenöl ist, das ein aus 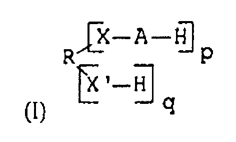 und
(II) R⁅X-A-H]ₜ
bestehendes Polyol ist, wo R ein Rest eines Polyol-, Polyamin- oder Aminoalkoholinitiators ist; X und X' gleich oder verschieden sein können und O, N oder NH sind; p eine ganze Zahl von 1 bis 5 ist; q eine ganze Zahl von 1 bis 5 ist, wobei p+q von 3 bis 8 ist, t eine ganze Zahl von 3 bis 8 ist und A gleich oder verschieden sein kann und aus der aus A1, A2 und A3 bestehenden Gruppe ausgewählt ist, wobei
A1 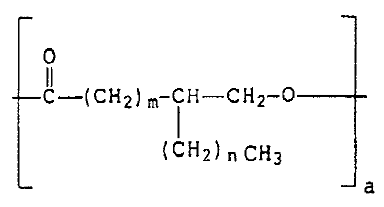 ist,
A2 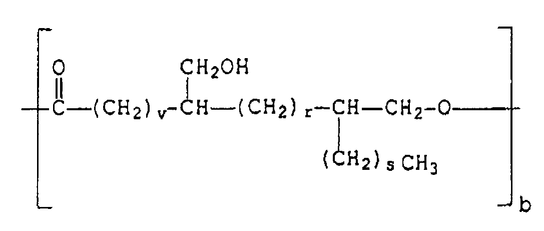 ist,
A3 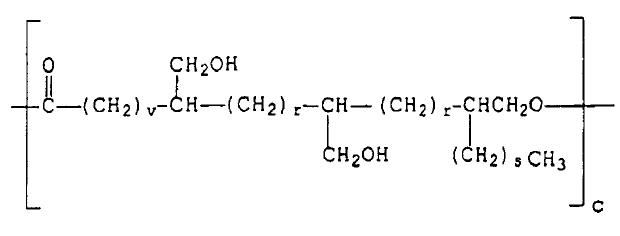 ist,
wobei m, n, v, r, s, a, b und c ganze Zahlen sind und m größer ist als 3, n größer oder gleich null ist und m+n von 11 bis 19 ist, v größer ist als 3, r größer oder gleich null ist, s größer oder gleich null ist und v+r+s von 10 bis 18 ist, a von 0 bis 35 ist, b von 0 bis 35 ist und c von 0 bis 35 ist, solange alle a's, b's und c's in einem Molekül des Polyols auf Pflanzölbasis nicht alle null sind und (a+b+c)/(p+q+t) größer als 0 bis etwa 100 in dem Polyol auf Pflanzenölbasis ist.

18. Polyether nach Anspruch 13, wobei die funktionalisierte Initiatorverbindung ein hydroxymethylierter Fettsäurealkylester oder eine hydroxymethylierte Fettsäure ist.

19. Initiatorzusammensetzung, die eine funktionalisierte Initiatorverbindung, einen Doppelmetallcyanid-Katalysatorkomplex und mindestens etwa 10 Gewichtsteile pro Million von Zinn, Titan, Rhodium, Nickel, einem Enzym, einer Säure, Iod oder einer Kombination davon umfasst, wobei die Initiatorverbindung ein modifiziertes Pflanzenöl ist, das ein aus 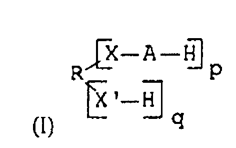 und
(II) R⁅X-A-H]ₜ
bestehendes Polyol ist, wo R ein Rest eines Polyol-, Polyamin- oder Aminoalkoholinitiators ist; X und X' gleich oder verschieden sein können und O, N oder NH sind; p eine ganze Zahl von 1 bis 5 ist; q eine ganze Zahl von 1 bis 5 ist, wobei p+q von 3 bis 8 ist, t eine ganze Zahl von 3 bis 8 ist und A gleich oder verschieden sein kann und aus der aus A1, A2 und A3 bestehenden Gruppe ausgewählt ist, wobei
A1 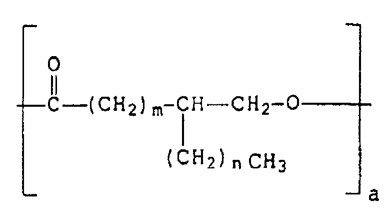 ist,
A2 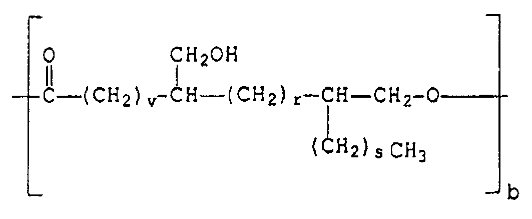 ist,
A3 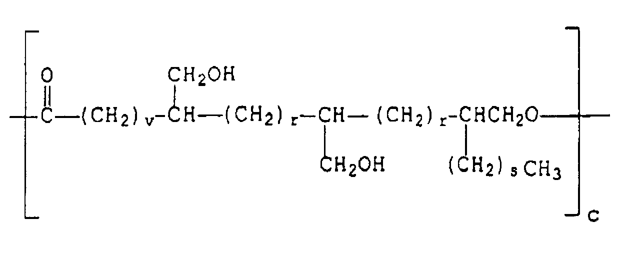 ist,
wo m, n, v, r, s, a, b und c ganze Zahlen sind und m größer ist als 3, n größer oder gleich null ist und m+n von 11 bis 19 ist, v größer ist als 3, r größer oder gleich null ist, s größer oder gleich null ist und v+r+s von 10 bis 18 ist, a von 0 bis 35 ist, b von 0 bis 35 ist und c von 0 bis 35 ist, solange alle a's, b's und c's in einem Molekül des Polyols auf Pflanzölbasis nicht alle null sind und (a+b+c)/(p+q+t) größer als 0 bis etwa 100 in dem Polyol auf Pflanzenölbasis ist.

20. Verfahren, bei dem eine Mischung von mindestens einem Alkylenoxid mit der Initiatorverbindung nach Anspruch 19 gebildet wird und die Mischung Bedingungen unterworfen wird, die ausreichen, um den Katalysatorkomplex zu aktivieren und die Initiatorverbindung zu alkoxylieren, um den Polyether zu bilden.

## Revendications

1. Procédé de préparation d'un polyéther, comprenant les étapes suivantes :
i) préparer un composé amorceur fonctionnalisé, en faisant réagir un composé amorceur précurseur avec un composé agent de fonctionnalisation et un catalyseur de fonctionnalisation, lequel composé amorceur précurseur est une huile végétale, une graisse animale, un acide gras ou un ester alkylique d'acide gras, et lequel composé amorceur fonctionnalisé est un dérivé hydroxyméthylé d'une huile végétale, d'une graisse animale, d'un acide gras ou d'un ester alkylique d'acide gras ;
ii) préparer un mélange formé du composé amorceur fonctionnalisé issu de l'étape (i) et contenant au moins une partie du catalyseur de fonctionnalisation, d'un oxyde d'alkylène et d'un catalyseur complexe à base de cyanure bimétallique ;
iii) et mettre ce mélange dans des conditions suffisantes pour qu'il y ait activation du catalyseur complexe et alcoxylation du composé amorceur fonctionnalisé menant à la formation d'un polyéther.

2. Procédé conforme à la revendication 1, dans lequel le composé amorceur précurseur est une graisse animale, une huile végétale, une graisse animale modifiée ou une huile végétale modifiée, ou une combinaison de telles substances.

3. Procédé conforme à la revendication 1, dans lequel le composé amorceur fonctionnalisé est une huile végétale modifiée, qui est un polyol constitué de composés de formules 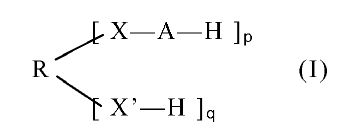 et
R⁅X-A-H]ₜ (II)
dans lesquelles
■ R représente le reste d'un amorceur de type polyol, polyamine ou amino-alcool,
■ X et X' représentent des chaînons, identiques ou différents, symbolisés par O, N ou NH,
■ l'indice p est un nombre entier valant de 1 à 5 et l'indice q est un nombre entier valant de 1 à 5, ces nombres étant tels que la somme p+q vaut de 3 à 8,
■ l'indice t est un nombre entier valant de 3 à 8,
■ et les symboles A représentent des restes qui peuvent être identiques ou différents et qui sont choisis parmi les restes désignés par A1, A2 et A3, étant entendu que :
■ A1 représente un reste de formule 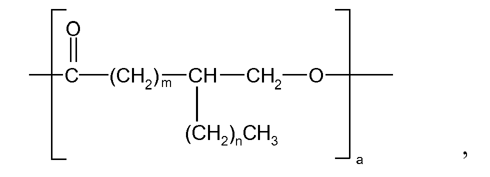
■ A2 représente un reste de formule 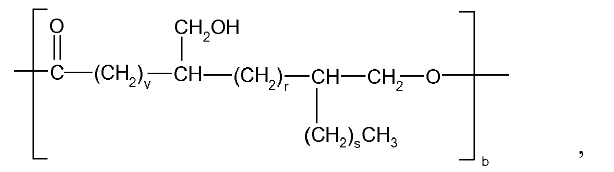
■ et A3 représente un reste de formule 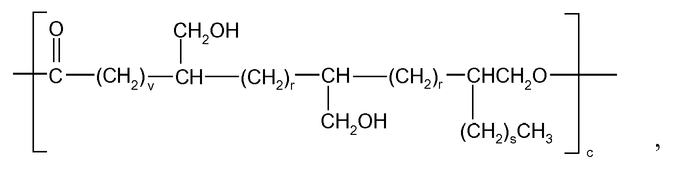
dans lesquelles formules les indices m, n, v, r, s, a, b et c sont des nombres entiers, m est supérieur à 3 et n est supérieur ou égal à 0, ces indices étant tels que la somme m+n vaut de 11 à 19, v est supérieur à 3, r est supérieur ou égal à 0 et s est supérieur ou égal à 0, ces indices étant tels que la somme v+r+s vaut de 10 à 18, et a vaut de 0 à 35,
b vaut de 0 à 35 et c vaut de 0 à 35, sous réserve que, dans toute molécule du polyol à base d'huile végétale, les indices a, b et c ne soient pas tous nuls, et que, dans le polyol à base d'huile végétale, le rapport (a+b+c)/(p+q+t) vaille de plus de 0 à environ 100.

4. Procédé conforme à la revendication 1, dans lequel l'oxyde d'alkylène est de l'oxyde d'éthylène.

5. Procédé conforme à la revendication 1, dans lequel l'oxyde d'alkylène est de l'oxyde de propylène ou de l'oxyde de 1,2-butylène.

6. Procédé conforme à la revendication 1, dans lequel le catalyseur de fonctionnalisation est un acide.

7. Procédé conforme à la revendication 1, dans lequel le catalyseur de fonctionnalisation est de l'iode.

8. Procédé conforme à la revendication 1, dans lequel, dans l'étape (ii), le composé amorceur contient au moins 25 % du catalyseur de fonctionnalisation employé dans l'étape (i).

9. Procédé conforme à la revendication 8, dans lequel, dans l'étape (ii), le composé amorceur contient au moins environ 50 % du catalyseur de fonctionnalisation employé dans l'étape (i).

10. Procédé conforme à la revendication 9, dans lequel, dans l'étape (ii), le composé amorceur contient pratiquement tout le catalyseur de fonctionnalisation employé dans l'étape (i).

11. Procédé conforme à la revendication 1, dans lequel le polyéther contient au moins environ 10 parties par million, en poids, du catalyseur de fonctionnalisation.

12. Procédé conforme à la revendication 11, dans lequel le polyéther contient au moins environ 50 parties par million, en poids, du catalyseur de fonctionnalisation.

13. Composition de polyéther constituée d'un polyéther préparé conformément à la revendication 1, du catalyseur de fonctionnalisation et du catalyseur à base de cyanure bimétallique.

14. Composition de polyéther conforme à la revendication 13, laquelle composition de polyéther contient au moins environ 10 parties par million, en poids, du catalyseur de fonctionnalisation.

15. Composition de polyéther conforme à la revendication 14, laquelle composition de polyéther contient au moins environ 50 parties par million, en poids, du catalyseur de fonctionnalisation.

16. Composition de polyéther conforme à la revendication 13, dans laquelle le composé amorceur fonctionnalisé est une huile végétale hydroxyméthylée, une graisse animale hydroxyméthylée, ou une combinaison de telles substances.

17. Composition de polyéther conforme à la revendication 16, dans laquelle le composé amorceur fonctionnalisé est une huile végétale hydroxyméthylée, qui est un polyol constitué de composés de formules 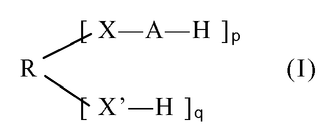 et
R⁅X-A-H]ₜ (II)
dans lesquelles
■ R représente le reste d'un amorceur de type polyol, polyamine ou amino-alcool,
■ X et X' représentent des chaînons, identiques ou différents, symbolisés par O, N ou NH,
■ l'indice p est un nombre entier valant de 1 à 5 et l'indice q est un nombre entier valant de 1 à 5, ces nombres étant tels que la somme p+q vaut de 3 à 8,
■ l'indice t est un nombre entier valant de 3 à 8,
■ et les symboles A représentent des restes qui peuvent être identiques ou différents et qui sont choisis parmi les restes désignés par A1, A2 et A3, étant entendu que :
■ A1 représente un reste de formule 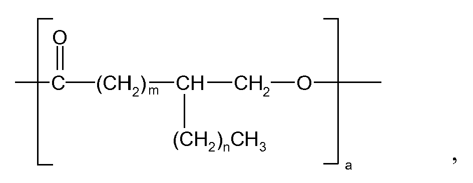
■ A2 représente un reste de formule 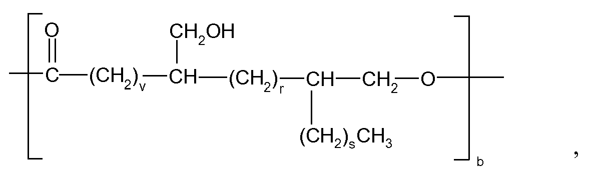
■ et A3 représente un reste de formule 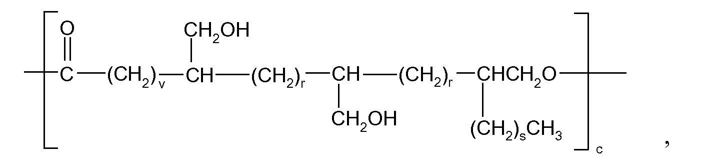
dans lesquelles formules les indices m, n, v, r, s, a, b et c sont des nombres entiers, m est supérieur à 3 et n est supérieur ou égal à 0, ces indices étant tels que la somme m+n vaut de 11 à 19, v est supérieur à 3, r est supérieur ou égal à 0 et s est supérieur ou égal à 0, ces indices étant tels que la somme v+r+s vaut de 10 à 18, et a vaut de 0 à 35, b vaut de 0 à 35 et c vaut de 0 à 35, sous réserve que, dans toute molécule du polyol à base d'huile végétale, les indices a, b et c ne soient pas tous nuls, et que, dans le polyol à base d'huile végétale, le rapport (a+b+c)/(p+q+t) vaille de plus de 0 à environ 100.

18. Composition de polyéther conforme à la revendication 13, dans laquelle le composé amorceur fonctionnalisé est un ester alkylique d'acide gras hydroxyméthylé ou un acide gras hydroxyméthylé.

19. Composition d'amorceur comprenant un composé amorceur fonctionnalisé, un catalyseur complexe à base de cyanure bimétallique, et au moins environ 10 parties par million d'étain, de titane, de rhodium, de nickel, d'une enzyme, d'un acide, d'iode ou d'une combinaison de telles substances, dans laquelle le composé amorceur est une huile végétale modifiée, qui est un polyol constitué de composés de formules 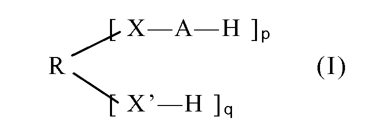 et
R⁅X-A-H]ₜ (II)
dans lesquelles
■ R représente le reste d'un amorceur de type polyol, polyamine ou amino-alcool,
■ X et X' représentent des chaînons, identiques ou différents, symbolisés par O, N ou NH,
■ l'indice p est un nombre entier valant de 1 à 5 et l'indice q est un nombre entier valant de 1 à 5, ces nombres étant tels que la somme p+q vaut de 3 à 8,
■ l'indice t est un nombre entier valant de 3 à 8,
■ et les symboles A représentent des restes qui peuvent être identiques ou différents et qui sont choisis parmi les restes désignés par A1, A2 et A3, étant entendu que :
■ A1 représente un reste de formule 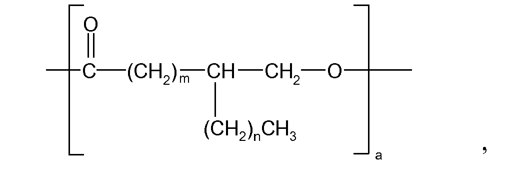
■ A2 représente un reste de formule 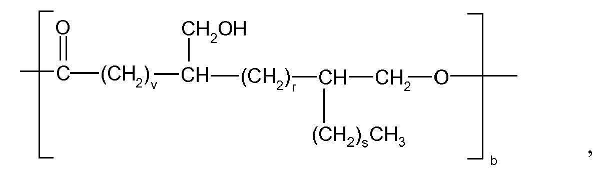
■ et A3 représente un reste de formule 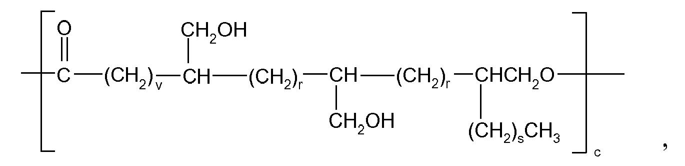
dans lesquelles formules les indices m, n, v, r, s, a, b et c sont des nombres entiers, m est supérieur à 3 et n est supérieur ou égal à 0, ces indices étant tels que la somme m+n vaut de 11 à 19, v est supérieur à 3, r est supérieur ou égal à 0 et s est supérieur ou égal à 0, ces indices étant tels que la somme v+r+s vaut de 10 à 18, et a vaut de 0 à 35, b vaut de 0 à 35 et c vaut de 0 à 35, sous réserve que, dans toute molécule du polyol à base d'huile végétale, les indices a, b et c ne soient pas tous nuls, et que, dans le polyol à base d'huile végétale, le rapport (a+b+c)/(p+q+t) vaille de plus de 0 à environ 100.

20. Procédé comprenant le fait de préparer un mélange formé d'au moins un oxyde d'alkylène et d'une composition d'amorceur conforme à la revendication 19, et le fait de mettre ce mélange dans des conditions suffisantes pour qu'il y ait activation du catalyseur complexe et alcoxylation du composé amorceur menant à la formation d'un polyéther.
